(19) Europäisches Patentamt
European Patent Office
Office européen des brevets

(11) EP 4 349 172 A1

(12) **EUROPEAN PATENT APPLICATION**
published in accordance with Art. 153(4) EPC

(43) Date of publication:
**10.04.2024 Bulletin 2024/15**

(21) Application number: **21944126.8**

(22) Date of filing: **02.06.2021**

(51) International Patent Classification (IPC):
***A01N 63/23*** *(2020.01)* ***A01N 63/22*** *(2020.01)*
***A01P 7/04*** *(2006.01)*

(52) Cooperative Patent Classification (CPC):
**A01N 63/22; A01N 63/23; A01P 7/04**

(86) International application number:
**PCT/JP2021/021046**

(87) International publication number:
**WO 2022/254622 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SDS BIOTECH K.K.**
**Tokyo 101-0022 (JP)**

(72) Inventors:
- **TAKASHIMA, Shinichiro**
  **Tokyo 101-0022 (JP)**
- **AMAKI, Yusuke**
  **Tokyo 101-0022 (JP)**
- **TANAKA, Keijitsu**
  **Tokyo 101-0022 (JP)**

(74) Representative: **Brann AB**
**P.O. Box 3690**
**Sveavägen 63**
**103 59 Stockholm (SE)**

(54) **AGRICULTURAL/HORTICULTURAL INSECTICIDE COMPOSITION AND AGRICULTURAL/HORTICULTURAL INSECT PEST CONTROL METHOD**

(57) The present invention provides: an agricultural/horticultural insecticide composition which contains an insecticidal protein derived from Bacillusthuringiensis, and prumycin or a salt thereof or kanosamine or a salt thereof; or a method for controlling agricultural/horticultural insect pests which uses said agricultural/horticultural insecticide composition.

EP 4 349 172 A1

**Description**

TECHNICAL FIELD

The present invention relates to an insecticidal composition for agricultural or horticultural use and a method of controlling an agricultural or horticultural pest.

BACKGROUND ART

*Bacillus thuringiensis* culture-containing preparations (hereinafter referred to as "BT preparations") have been widely used as microbial pesticides to control agricultural and/or sanitary pests. In general, when chemically synthesized pesticides are used, a period of time must be provided before crops are harvested to avoid their residues on the crops. On the other hand, BT preparations are easily degraded in soil and can be used on crops just before harvest. In addition, compared to chemically synthesized pesticides, BT preparations exert effects specific to pest species and can control only target pest species without harming useful insects. For these reasons, BT preparations have been used to promote reduced pesticide use and environmentally friendly agriculture without the risk of environmental pollution or causing substances harmful to the human body to be remained on crops (NPL 1).

*Bacillus thuringiensis* is a Gram-positive bacterium that widely inhabits in soil and produces granules containing crystalline insecticidal proteins called crystals (hereinafter, simply referred to as "insecticidal proteins") in bacterial cells during the sporulation stage. The insecticidal proteins are known to be activated by proteases in the insect gut and to exhibit insecticidal activity against insects. *Bacillus thuringiensis* also produces different insecticidal proteins depending on its subspecies, and these insecticidal proteins have different insecticidal activities. For example, the subspecies *kurstaki* and *aizawai* are known to exert activity on the order *Lepidoptera* and *Diptera* insects, *israelensis* on *Diptera* insects, and *tenebrionis* and *japonensis buibui* on *Coleoptera* insects, respectively (NPL 2).

Currently, more than 400 kinds of insecticidal proteins have been identified and classified as Cry1 to Cry73. *Bacillus thuringiensis* does not necessarily produce one insecticidal protein per strain. For example, *Bacillus thuringiensis* HD-1 strain produces three types of insecticidal proteins, CrylA(a), CrylA(b), and Cry1A(c).

The insecticidal proteins are classified, based on molecular weight, into two major types: 130 kDa type and 70 kDa type. The 130 kDa type includes CrylA, which is effective in the order *Lepidoptera,* Cry4A and Cry4B, which are effective in the order *Diptera,* Cry8C, which is effective in the order *Coleoptera,* and Cry5, which is effective in the order *Nematoda.* On the other hand, the 70k Da type includes Cry2, which is effective in both the orders *Lepidoptera* and *Diptera,* Cry11A and Cry11B, which are effective in the order *Diptera,* and Cry3B, which is effective in the order *Coleoptera* (NPL 3).

To date, many BT preparations have been developed and marketed that take advantage of the characteristics of the above insecticidal proteins. However, in the field of cultivation, there is a need for a control method using a BT preparation that is economical, stable in efficacy, and fast-acting, like in the case of chemically synthesized pesticides. Various approaches have been implemented to enhance the insecticidal activity of BT preparations, one of which is to mix them with a synergist. Examples of the synergist-mixing method include a method of mixing different insecticidal proteins, for instance, mixing Cry1A(a) and Cry1A(c) (NPL 4), mixing Cry1A(a) and CrylC (NPL 5), and mixing CrylA and/or Cry2 and Vip3Aa, an insecticidal protein secreted during germination (NPL 6, NPL 7). Other examples of the synergist-mixing method include: a method of mixing an insecticidal protein(s) with spores of *Bacillus* sp. (NPL 8, NPL 9); or a method of mixing an insecticidal protein(s) with zwittermicin A produced by *Bacillus cereus* or other bacteria (PTL1).

The above-mentioned zwittermicin A is a low-molecular-weight and water-soluble antibiotic produced by *Bacillus cereus* or *Bacillus thuringiensis* (NPL 10), and is known to inhibit the growth of plant pathogenic filamentous fungi and some bacteria (NPL 11). Manker *et al.* (PTL 2) has reported that zwittermicin A, although it alone does not show insecticidal activity, enhances the activity of *Bacillus thuringiensis* when mixed with *Bacillus thuringiensis.*

In addition, Fernandez *et al.* has reported that *Bacillus thuringiensis* that produces zwittermicin A in addition to insecticidal proteins has higher insecticidal activity than conventional *Bacillus thuringiensis* (PTL 3).

Further, another literature (PTL 4) has reported another substance that is different from zwittermicin A and increases the insecticidal activity of *Bacillus thuringiensis,* but its structure has not yet been identified.

The pest species targeted by BT preparations are mainly the order *Lepidoptera.* Among them, *Spodoptera litura* and *Helicoverpa armigera* are extremely broad-eating and are each considered to be a critical pest that attacks many vegetables and field crops, thereby causing extensive damage. *Spodoptera litura* is widely distributed in Asia, and even in Japan, it was once believed that it could not pass the winter in the field unless the climate is warm. However, due to the recent increase in the number of heated facilities and climate warming, the breeding site of Spodoptera litura has been moving northward, and its breeding area is also expanding. The genus *Spodoptera,* to which *Spodoptera litura* belongs, includes many critical species as agricultural pests. Examples include S. *exigua, S. depravata,* or *S. frugiperda.*

Prumycin (4-N-D-alanyl-2,4-diamino-2,4-dideoxyarabinose) is produced by bacteria of the genus *Streptomyces*

and/or the genus *Bacillus,* and is known as an agent effective against, for instance, gray mold, sclerotinia rot, and powdery mildew. Prumycin was isolated from the culture filtrate of *Streptomyces* sp. F-1028 strain by Hata *et al.* in 1971 (NPL 12), and then, in 1973, Omura *et al.* reported that it was found to be effective against *Fabaceae* gray mold of legumes, sclerotinia rot, and cucumber powdery mildew (NPL 13). The structure of prumycin was determined by Omura *et al.* in 1974 (NPL 14). Subsequently, the total synthesis was achieved by three independent groups (NPLs 15 to 24), and the structure of prumycin shown in the following formula was identified.

[Chemical Formula 1]

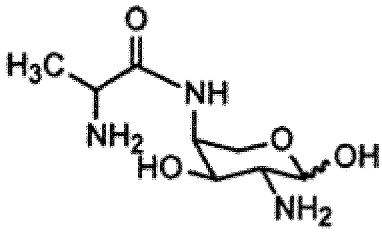

.

Regarding naturally occurring prumycin, it has been reported that a specific strain of *Bacillus cereus,* in addition to the above-mentioned *Streptomyces* sp. produces prumycin (PTL 5). Further, in 1989, it was reported that a specific strain of *Bacillus subtilis* produces prumycin (PTL 6).

Kanosamine (3-amino-3-deoxy-D-glucopyranose) is known to be produced by *Bacillus cereus* or *Bacillus aminoglucosidicus.* Kanosamine was isolated by Cron *et al.* in 1958 as an acid hydrolysate of kanamycin, and the structure shown in the following formula was identified (NPL 25). Later, in 1996, Milner *et al.* reported that kanosamine was found to be effective against *Botrytis cinerea, Rhizoctonia solani, Alternaria alternata,* and *Fusarium oxysporum* (NPL 26).

[Chemical Formula 2]

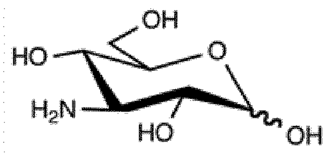

.

CITATION LIST

PATENT LITERATURE

PTL 1: JP H08-501798 A
PTL 2: JP 2001-516201 A
PTL 3: WO 2020/102592 A1
PTL 4: US 6635245 B1
PTL 5: JP S54-157896 A
PTL 6: JP H02-209803 A
PTL 7: WO 2018/029775 A1

NON PATENT LITERATURE

NPL 1: Plant Biotechnology Journal. 9, 283-300 (2011)
NPL 2: Microbiological Reviews., June, 242-255 (1989)
NPL 3: Toxins., 6, 3296-3325 (2014)
NPL 4: Appl. Environ. Microbiol., Feb, 583-586 (1996)

NPL 5: Letters in Applied Microbiology., 40, 460-465 (2005)
NPL 6: PLoS ONE 9(10): e107196. doi:10.1371/journal.pone.0107196 (2014)
NPL 7: Appl. Biochem. Biotechnol., July;188(3), 798-809 (2019).
NPL 8: Appl. Environ. Microbiol., Feb, 564-569 (1996)
NPL 9: Appl. Environ. Microbiol., Apr, 1385-1389 (1998)
NPL 10: Tetrahedron Lett., 35(16), 2499-2502 (1994)
NPL 11: Curr. Microbiol., 37, 6-11 (1998)
NPL 12: J. Antibiotics., 24: 900-901 (1971)
NPL 13: Agric. Biol. Chem., 37, 2805-2812 (1973)
NPL 14: J. Chem. Soc. Perkin Trans., 1, 1627-1631 (1974)
NPL 15: Tetrahedron Lett., 16, 1853-1856 (1975)
NPL 16: Tetrahedron Lett., 17, 379-382 (1976)
NPL 17: Chem. Lett., 5, 201-202 (1976)
NPL 18: Carbohydr. Res., 60, 75-84 (1978)
NPL 19: Carbohydr. Res., 72, 261-266 (1979)
NPL 20: B. Chem. Soc. Jpn., 51, 951-952 (1978)
NPL 21: Carbohydr. Res., 51, 10-12 (1976)
NPL 22: Agric. Biol. Chem., 42, 153-158 (1978)
NPL 23: Carbohydr. Res., 52, 137-149 (1976)
NPL 24: J. Carbohydr. Chem., 7, 605-616 (1988)
NPL 25: J. Antibiotics, Ser. A., 11(2):73 (1958)
NPL 26: Appl. Environ. Microbiol., 62(8), 3061-3065 (1996)
NPL 27: J. Am. Chem. Soc., 83, 8, 1882-1885 (1961)
NPL 28: Angew. Chem. Int. Ed., 5(11), 967-967 (1966)
NPL 29: J. Bacteriol., 94(2), 485 (1967)
NPL 30: Appl. Environ. Microbiol., 64(12), 4782-4788 (1998)
NPL 31: Pest Manag Sci., 73, 2419-2428 (2017)
NPL 32: Appl. Environ. Microbiol., Dec, 4404-4412 (1994)
NPL 33: Appl. Environ. Microbiol., July, 3966-3977 (2005)

## SUMMARY OF INVENTION

### TECHNICAL PROBLEM

The BT preparations mentioned above are sometimes less stable and less effective than chemical pesticides due to, for instance, the effects of UV rays and uneven adhesion to plant leaves, and the development of BT preparations with better control effects has been sought.

Under such circumstances, the present inventors have conducted intensive research to create a bioproduct with high insecticidal effect, and have found that prumycin or a salt thereof or kanosamine or a salt thereof can be mixed with an insecticidal protein to exert an effect of significantly enhancing the insecticidal activity of the insecticidal protein.

Prumycin and kanosamine have not been reported to have insecticidal activity, and their functions as a factor of enhancing the insecticidal activity of insecticidal proteins are completely unknown.

As a prumycin-containing composition for agricultural or horticultural use, an microbicidal composition for agricultural or horticultural use containing prumycin and surfactins as active ingredients has been reported (PTL 7). PTL 7 is silent on insecticidal action although the composition is found to exert the microbicidal action.

An object of the present invention is to provide a novel insecticidal composition for agricultural or horticultural use that has increased insecticidal effects and is environmentally friendly, and a method of controlling an agricultural or horticultural pest.

### SOLUTION TO PROBLEM

The present inventors have examined the effects of conventional microbicidal compounds in detail and have found that prumycin or a salt thereof or kanosamine or a salt thereof can significantly enhance the insecticidal activity of an insecticidal protein and exhibits extremely useful insecticidal activity. As a result, the present invention has been completed that relates to an insecticidal composition for agricultural or horticultural use and is more effective than conventional BT preparations for controlling insect pests, especially the order *Lepidoptera,* that damage many vegetables and field crops and cause extensive damage to them. The present invention encompasses the invention exemplified below as embodiments thereof.

[1] An insecticidal composition for agricultural or horticultural use, comprising:
an insecticidal protein derived from *Bacillus thuringiensis,* and prumycin or a salt thereof or kanosamine or a salt thereof.
[2] The insecticidal composition for agricultural or horticultural use according to [1], wherein the insecticidal protein comprises CrylA or Cry1C.
[3] The insecticidal composition for agricultural or horticultural use according to [1] or [2], comprising a dried *Bacillus thuringiensis* culture comprising the insecticidal protein.
[4] The insecticidal composition for agricultural or horticultural use according to any one of [1] to [3], comprising a dried culture of bacteria that produces prumycin or a salt thereof or kanosamine or a salt thereof.
[5] The insecticidal composition for agricultural or horticultural use according to any one of [1] to [4], further comprising 0.1 to 10 mass% of calcium chloride.
[6] The insecticidal composition for agricultural or horticultural use according to any one of [1] to [5], which is for application to a plant while using a liquid comprising the prumycin or a salt thereof or kanosamine or a salt thereof in an amount of 0.1 ppm to 100 ppm.
[7] The insecticidal composition for agricultural or horticultural use according to any one of [1] to [6], which is for application to a plant while using a liquid comprising the insecticidal protein in an amount of 0.1 ppm to 500 ppm.
[8] The insecticidal composition for agricultural or horticultural use according to any one of [1] to [7], comprising prumycin hydrochloride.
[9] The insecticidal composition for agricultural or horticultural use according to any one of [1] to [8], comprising kanosamine hydrochloride.
[10] A method of controlling an agricultural or horticultural pest, the method comprising the steps of (a) applying an insecticidal protein derived from *Bacillus thuringiensis* to a plant, and (b) applying prumycin or a salt thereof or kanosamine or a salt thereof to the plant simultaneously, continuously, or separately with the insecticidal protein.
[11] A method of controlling an agricultural or horticultural pest, comprising the step of applying prumycin or a salt thereof or kanosamine or a salt thereof to a recombinant plant that produces an insecticidal protein derived from *Bacillus thuringiensis.*
[12] The control method according to [10], where the application in step (a) or (b) comprises soil mixing, irrigation, seed smear, seed dipping, or foliage application.
[13] The control method according to [10] or [12], comprising using an insecticidal composition for agricultural or horticultural use comprising the insecticidal protein and the prumycin or a salt thereof or kanosamine or a salt thereof.

[1'] An insecticidal composition for agricultural or horticultural use, comprising an insecticidal protein derived from *Bacillus thuringiensis,* wherein the composition is used in combination with prumycin or a salt thereof or kanosamine or a salt thereof.
[2'] An insecticidal composition for agricultural or horticultural use, comprising prumycin or a salt thereof or kanosamine or a salt thereof, wherein the composition is used in combination with an insecticidal protein derived from *Bacillus thuringiensis.*
[3'] The insecticidal composition for agricultural or horticultural use according to [1'] or [2'], comprising an insecticidal protein derived from *Bacillus thuringiensis,* and prumycin or a salt thereof or kanosamine or a salt thereof.
[4'] The insecticidal composition for agricultural or horticultural use according to any one of [1'] to [3'], wherein the insecticidal protein comprises CrylA or Cry1C.
[5'] The insecticidal composition for agricultural or horticultural use according to any one of [1'] to [4'], comprising a dried *Bacillus thuringiensis* culture comprising the insecticidal protein.
[6'] The insecticidal composition for agricultural or horticultural use according to any one of [1'] to [5'], comprising a dried culture of bacteria that produces prumycin or a salt thereof or kanosamine or a salt thereof.
[7'] The insecticidal composition for agricultural or horticultural use according to any one of [1'] to [6'], further comprising 0.1 to 10 mass% of calcium chloride.
[8'] The insecticidal composition for agricultural or horticultural use according to any one of [1'] to [7'], which is for application to a plant while using a liquid comprising prumycin or a salt thereof or kanosamine or a salt thereof in an amount of 0.1 ppm to 100 ppm.
[9'] The insecticidal composition for agricultural or horticultural use according to any one of [1'] to [8'], which is for application to a plant while using a liquid comprising the insecticidal protein in an amount of 0.1 ppm to 500 ppm.
[10'] The insecticidal composition for agricultural or horticultural use according to any one of [1'] to [9'], comprising prumycin hydrochloride.
[11'] The insecticidal composition for agricultural or horticultural use according to any one of [1'] to [10'], comprising kanosamine hydrochloride.

[1"] Use of a composition comprising an insecticidal protein derived from *Bacillus thuringiensis* in combination with prumycin or a salt thereof or kanosamine or a salt thereof to control an agricultural or horticultural pest.
[2"] Use of a composition comprising prumycin or a salt thereof or kanosamine or a salt thereof in combination with an insecticidal protein derived from *Bacillus thuringiensis* to control an agricultural or horticultural pest.
[3"] The use according to [1"] or [2"], wherein the composition comprises an insecticidal protein derived from *Bacillus thuringiensis,* and prumycin or a salt thereof or kanosamine or a salt thereof.
[4"] The use according to any one of [1"] to [3"], wherein the insecticidal protein comprises CryIA or Cry1C.
[5"] The use according to any one of [1"] to [4"], wherein the composition comprises a dried *Bacillus thuringiensis* culture comprising the insecticidal protein.
[6"] The use according to any one of [1"] to [5"], wherein the composition comprises a dried culture of bacteria that produces prumycin or a salt thereof or kanosamine or a salt thereof.
[7"] The use according to any one of [1"] to [6"], wherein the composition further comprises 0.1 to 10 mass% of calcium chloride.
[8"] The use according to any one of [1"] to [7"], which is for application to a plant while using a liquid comprising prumycin or a salt thereof or kanosamine or a salt thereof in an amount of 0.1 ppm to 100 ppm.
[9"] The use according to any one of [1"] to [8"], which is for application to a plant while using a liquid comprising the insecticidal protein in an amount of 0.1 ppm to 500 ppm.
[10"] The use according to any one of [1"] to [9"], wherein the composition comprises prumycin hydrochloride.
[11"] The use according to any one of [1"] to [10"], wherein the composition comprises kanosamine hydrochloride.

## ADVANTAGEOUS EFFECTS OF INVENTION

One aspect of the present invention provides an insecticidal composition for agricultural or horticultural use with high insecticidal efficacy and low environmental impact and a method of controlling an agricultural or horticultural pest. The insecticidal composition for agricultural or horticultural use has excellent insecticidal activity against pests damaging vegetables and field crops, especially against *Spodoptera litura* and *Helicoverpa armigera,* and enables more effective control and efficient control of agricultural or horticultural pests with a smaller amount of BT preparation applied than the application of conventional BT preparation alone.

## DESCRIPTION OF EMBODIMENTS

(Insecticidal composition for agricultural or horticultural use)

In one aspect of the present invention, an insecticidal protein derived from *Bacillus thuringiensis* is used in combination with prumycin or a salt thereof or kanosamine or a salt thereof. The insecticidal protein derived from *Bacillus thuringiensis* and prumycin or a salt thereof or kanosamine or a salt thereof may be prepared separately and mixed to prepare a single composition when applied to plants or may be separately applied to plants. A composition containing an insecticidal protein derived from *Bacillus thuringiensis* and prumycin or a salt thereof or kanosamine or a salt thereof may be prepared and stored in advance, and the composition may then be applied to plants.
In one embodiment of the present invention, *Bacillus thuringiensis* for producing the insecticidal protein used in the composition may be isolated from a natural source or purchased from, for instance, a strain repository organization. Examples of *Bacillus thuringiensis* that can be preferably used include a subspecies *kurstaki, aizawai, israelensis, tenebrionis,* or *japonensis buibui. Bacillus thuringiensis* may also include its viable cells, bacterial spores, cells that they have been killed by heat or chemical means, or crushed those cells. *Bacillus thuringiensis* used may be a dried *Bacillus thuringiensis* culture.
Commercially available BT preparations may also be each used as a composition containing an insecticidal protein derived from *Bacillus thuringiensis.* Examples of the commercially available BT preparation include Tune-Up (registered trademark) Water Dispersible Granule, Basilex (registered trademark) Wettable Powder, Delphin (registered trademark) Water Dispersible Granule, Zentari (registered trademark) Water Dispersible Granule, Flowback (registered trademark) DF, Esmarc (registered trademark) DF, Toaro (registered trademark) CT Wettable Powder, Saburina (registered trademark) Flowable, Agree (registered trademark) WG, Deliver (registered trademark), Javelin (registered trademark) WG, Thuricide (registered trademark), Biobit (registered trademark) DF, Crymax (registered trademark) WDG, Dipel (registered trademark) DF, Florbac (registered trademark), Foray (registered trademark) 48B, XenTari (registered trademark) DF, CoStar (registered trademark) WG, Cordalene (registered trademark), Cutlass (registered trademark), BactoSpeine (registered trademark) DF, BMP1232X (registered trademark)WP, Biolep (registered trademark), Lepinox Plus (registered trademark), Lipel SP, or Turex (registered trademark) 50WG.
In one embodiment of the present invention, the insecticidal protein is not particularly limited if the insecticidal

protein is derived from *Bacillus thuringiensis.* Specific examples include CryIA(a), CryIA(b), Cry1A(c), Cry1C, Cry1D, Cry2A, or Vip3A. In one embodiment of the present invention, the composition may contain only one or two or more types of these insecticidal proteins. In one embodiment, the insecticidal protein used may be those produced by *Bacillus thuringiensis.* In another embodiment, the insecticidal protein may be produced by chemical synthesis.

The insecticidal protein can also be produced by biosynthesis using bacteria such as *Bacillus thuringiensis.* Further, the insecticidal protein may be produced by naturally occurring bacteria belonging to *Bacillus thuringiensis* or by transformants (e.g., *E. coli, Bacillus subtilis,* plants) produced by conventional genetic engineering methods. In addition, the gene that has a nucleotide sequence encoding the amino acid sequence of an insecticidal protein (hereinafter referred to as "the gene") and is used to produce such a transformant may be (1) cloned from the naturally occurring gene, (2) cloned from the naturally occurring gene, in which some nucleotide deletions, substitutions, or additions in the gene sequence have been artificially introduced (i.e., the naturally occurring gene has been mutated (e.g., by partial mutation introduction, mutagenesis)), or (3) artificially synthesized.

In one embodiment of the present invention, prumycin or a salt thereof or kanosamine or a salt thereof, each of which is used as an ingredient to enhance the insecticidal activity of an insecticidal protein, may be produced by chemical synthesis as shown below, or may be obtained from a culture filtrate of a bacteria capable of producing the compound.

Prumycin or a salt thereof can be produced by chemical synthesis using the methods described in NPLs 13 to 24. In addition, prumycin or a salt thereof can be produced by biosynthesis as a fermentation product of a bacteria (e.g., *Streptomyces* sp., *Bacillus cereus, Bacillus subtilis*) capable of producing prumycin or a salt thereof. Cultured cells of a bacteria capable of producing prumycin or a salt thereof can also be used.

Kanosamine or a salt thereof can be produced by chemical synthesis using the method described in NPL 27 or NPL 28. Kanosamine or a salt thereof can be produced by biosynthesis as a fermentation product of a bacteria (e.g., *Bacillus cereus, Bacillus aminoglucosidicus*) capable of producing kanosamine or a salt thereof. Cultured cells of a bacteria capable of producing kanosamine or a salt thereof can also be used. Further, kanosamine or a salt thereof can be purchased as a reagent from Sigma-Aldrich Japan, LLC.

In one embodiment of the present invention, a salt of prumycin or a salt of kanosamine may be used. The salt of prumycin or the salt of kanosamine is not particularly limited. Examples include a hydrochloride, phosphate, borate, formate, acetate, or benzoate. A hydrochloride or acetate is preferred.

The method of culturing each bacteria capable of producing prumycin or a salt thereof or kanosamine or a salt thereof is not particularly limited. However, a known method such as static culture on solid medium or liquid culture may be used. The type of available culture medium and culture conditions, for instance, are not particularly limited as long as the above bacteria can survive and grow. Examples include, in addition to common culture medium such as meat extract broth, a culture medium containing glucose, peptone, or yeast extract. It is also possible to use, other than liquid medium, solid medium such as agar-containing slant medium or plate medium.

It is possible to use, as a carbon source for the above-mentioned culture medium, any kind of carbon source that can be utilized by the above-mentioned strains. Specific examples include sugar (e.g., glucose, galactose, lactose, sucrose, maltose, malt extract, waste molasses, glutinous starch syrup, starch hydrolysate) as well as various other synthetic or natural carbon sources that can be utilized by bacteria capable of producing prumycin or a salt thereof or kanosamine or a salt thereof.

Similarly, as a nitrogen source for the above-mentioned culture medium, it is possible to use organic nitrogen-containing substances (e.g., peptone, meat extract, yeast extract, soybean flour, corn steep liquor) and various other synthetic or natural substances that can be utilized by the strains.

Inorganic salts (e.g., sodium chloride, phosphate), salts of metal (e.g., calcium, magnesium, iron), and other micronutrient sources (e.g., vitamins, amino acids) can also be added to the culture medium as needed, according to the routine procedure for microbial culture.

The above-mentioned culture may be performed under aerobic conditions (e.g., shaking or aerobic culture). The culture temperature is preferably from 20 to 40°C and more preferably from 25 to 35°C, the pH is preferably from 5 to 8 and more preferably from 6 to 7, and the culture period is preferably from 1 to 4 days and more preferably from 2 to 3 days.

It is possible to use prumycin or a salt thereof or kanosamine or a salt thereof contained in the culture broth of bacteria producing prumycin or a salt thereof or kanosamine or a salt thereof. In this case, the culture broth itself may be used, the culture filtrate may be used, or the substance may be purified from the culture filtrate and then used. Prumycin or a salt thereof or kanosamine or a salt thereof may each be purified from the culture broth. This method is not particularly limited, and can be performed by any known method such as acid precipitation, salt precipitation, ultrafiltration, various types of chromatography, and/or electrophoresis.

In one embodiment, the composition may be 1) a composition containing a chemically synthesized insecticidal protein and chemically synthesized prumycin or a salt thereof or kanosamine or a salt thereof; 2) a composition containing a chemically synthesized insecticidal protein and biosynthesized prumycin or a salt thereof or kanosamine or a salt

thereof; 3) a composition containing a chemically synthesized insecticidal protein and a dried culture of bacteria that produces prumycin or a salt thereof or kanosamine or a salt thereof, which culture contains prumycin or a salt thereof or kanosamine or a salt thereof; 4) a composition containing a biosynthesized insecticidal protein and chemically synthesized prumycin or a salt thereof or kanosamine or a salt thereof; 5) a composition containing a biosynthesized insecticidal protein and biosynthesized prumycin or a salt thereof or kanosamine or a salt thereof; 6) a composition containing a biosynthesized insecticidal protein and a dried culture of bacteria that produces prumycin or a salt thereof or kanosamine or a salt thereof, which culture contains prumycin or a salt thereof or kanosamine or a salt thereof; 7) a composition containing a dried *Bacillus Thuringiensis* culture containing an insecticidal protein and chemically synthesized prumycin or a salt thereof or kanosamine or a salt thereof; 8) a composition containing a dried *Bacillus Thuringiensis* culture containing an insecticidal protein and biosynthesized prumycin or a salt thereof or kanosamine or a salt thereof; 9) a composition containing a dried *Bacillus Thuringiensis* culture containing an insecticidal protein and a dried culture of bacteria that produces prumycin or a salt thereof or kanosamine or a salt thereof, which culture contains prumycin or a salt thereof or kanosamine or a salt thereof; 10) a dried culture of bacteria that simultaneously produces an insecticidal protein and prumycin or a salt thereof or kanosamine or a salt thereof; or 11) a dried culture of bacteria that simultaneously produces an insecticidal protein, prumycin or a salt thereof, and kanosamine or a salt thereof.

Examples of the insecticidal protein contained in a dried culture of *Bacillus thuringiensis* subsp. *kurstaki* or *Bacillus thuringiensis* subsp. *aizawai* include CrylA(a), CrylA(b), Cry1A(c), Cry1C, Cry1D, or Cry2A. In one embodiment of the present invention, the content of insecticidal protein that can be an active ingredient in the composition depends on the form of use and the dilution factor, and is not particularly limited. However, the total content (concentration) of insecticidal protein in a liquid applied to plants is preferably from 0.1 ppm to 500 ppm and more preferably from 1 ppm to 50 ppm.

Note that the content (concentration) of insecticidal protein may be measured by the following method: the insecticidal protein group may be purified from a dried culture of *Bacillus thuringiensis* by the precipitation separation method using dextran sulfate and polyethylene glycol (NPL 29) as described by Goodman *et al.,* followed by separation and quantification by HPLC with reference to the analytical method of Masson *et al.* (NPL 30). Meanwhile, a commercially available BT preparation may be used. In this case, the BT preparation may be diluted and then separated and quantitated by HPLC without purification, with reference to the analytical method of Masson *et al.* described above (NPL 30) to measure the content (concentration) of insecticidal protein.

In one embodiment of the present invention, the content of prumycin or a salt thereof or kanosamine or a salt thereof in the composition depends on the form of use and the dilution factor, and is not particularly limited. However, the total content (concentration) of prumycin or a salt thereof or kanosamine or a salt thereof in a liquid applied to plants is preferably from 0.1 ppm to 100 ppm and more preferably from 0.5 ppm to 5 ppm. When prumycin or a salt thereof and kanosamine or a salt thereof are used in combination, the total content (concentration) of prumycin or a salt thereof and kanosamine or a salt thereof in the liquid applied to plants is preferably from 0.1 ppm or more and more preferably 0.5 ppm or more. Prumycin or a salt thereof or kanosamine or a salt thereof may be obtained as a dried culture of bacteria that produces prumycin or a salt thereof or kanosamine or a salt thereof. In this case, the content (concentration) of prumycin or a salt thereof or kanosamine or a salt thereof in the dried culture may be determined by CE-TOF-MS according to the analysis method of Tanaka *et al.* (NPL 31). Then, based on the content (concentration) of prumycin or a salt thereof or kanosamine or a salt thereof in the dried culture obtained while the dilution factor, for instance is considered, the content (concentration) of prumycin or a salt thereof or kanosamine or a salt thereof in the liquid applied to plants can be calculated.

The weight ratio between the insecticidal protein and prumycin or a salt thereof or kanosamine or a salt thereof is not particularly limited, and is preferably from 1000: 1 to 1:50 and more preferably from 50:1 to 1:5. The above numerical range of weight ratio may also be used when prumycin hydrochloride or kanosamine hydrochloride is used.

In one embodiment of the present invention, calcium chloride may be used as an ingredient of the composition to improve storage stability. The content of calcium chloride in the composition depends on the form of use and/or the dilution factor, and is not particularly limited. In one embodiment of the present invention, the content, however, is preferably from 0.1 to 10 mass% and more preferably from 1 to 5 mass% based on the composition.

In one embodiment of the present invention, the composition may be free of surfactins. The surfactins mean cyclic lipodepsipeptide-type substance having surface activation ability produced by *Bacillus* bacteria. Examples of the surfactins include surfactin, [$Ala^4$]surfactin, [$Leu^4$] surfactin, [$Val^7$] surfactin, or [$Ile^7$]surfactin. As used herein, the wording "free of" means that a specific ingredient is not intentionally added, and that the ingredient is allowed to be included as an impurity.

If no surfactins are included, the content of surfactins in the solution when applied to plants may be less than 1.0 ppm, less than 0.5 ppm, or less than 0.1 ppm.

One aspect of the present invention provides a composition with higher insecticidal activity than when the insecticidal protein alone is applied. Therefore, the composition can be used as an insecticidal composition for agricultural or horticultural use useful for controlling agricultural or horticultural pests. The composition itself or a diluted liquid thereof

may be provided on the roots, stems, leaves, seeds, or other parts of plants or in the cultivation soil. This can prevent crop damage caused by various agricultural pests.

In one embodiment of the present invention, the above-mentioned composition can be used for the control of a wide range of agricultural or horticultural pests (e.g., insects (e.g., the order *Coleoptera,* the order *Hemiptera,* the order *Thysanoptera,* the order *Diptera*), nematodes, noxious mites) as well as butterfly (the order *Lepidoptera*) pests. It is particularly suitable for use against butterfly pests. Examples of the agricultural or horticultural pest include the following.

*Lepidoptera* pests: *Cossus insularis, Adoxophyes honmai, Adoxophyes orana faciata, Grapholita molesta, Homona magnamina, Leguminivora glycinivorella, Lyonetia prunifoliella malinella, Caloptilia theivora, Phyllonorycter ringoniella, Phyllocnistis citrella, Acrolepiopsis sapporensis, Plutella xylostella, Argyresthia conjugella, Nokona regalis, Synanthedon hector, Stathmopoda masinissa, Carposina sasakii, Monema flavescens, Chilo suppressalis, Cnaphalocrocis medinalis, Hellila undalis, Ostrinia furnacalis, Parapediasia teterrella, Ephestia kuehniella, Galleris mellonella, Papilio machaon hippocrates, Pieris rapae crucivora, Parnara guttata, Ascotis selenaria, Agrius convolvuli, Orgyia thyellina, Hyphantria cunea, Agrotis ipsilon, Agrotis segetum, Autographa nigrisigna, Trichoplusia ni, Helicoverpa armigera, Helicoverpa assulta, Mamestra brassicae, Mythimna separata, Naranga aenescens, Spodoptera exigua, Spodoptera litura, Helicoverpa zea, Heliothis virescens, Spodoptera littoralis, Spodoptera frugiperda, Spodoptera eridania, Manduca sexta, Endopiza viteana, Pectinophora gossypiella, Cydla pomonella, Ostrinia nubilalis, Pseudoplusia includens,* etc.

*Coleoptera: Anomala cuprea, Anomala rufocuprea, Popillia japonica, Melanotus tamsuyensis, Anthrenus verbasci, Henosepilachna vigintioctopunctata, Tenebrio molitor, Tribolium castaneum, Anoplophora malasiaca, Monochamus alternatus endai, Callosobruchus chinensis, Aulacophora femoralis, Phyllotreta striolata, Cylas formicarius, Curculio sikkimensis, Lissorhoptrus oryzophilus, Sitophilus zeamais, Sphenophrus venatus vestius, Anthonomus grandis, Rhynchites heros, Lasioderma serricorne, Epuraea domina, Oulema oryzae, Hypera postica, Lepinotarsa decemlineata, Sitophilus granarius, Diabrotica undecimpunctata, Diabrotica virgifera, Diabrotica barberi, Paederus fuscipes,* etc.

*Hemiptera: Arboridia apicalis, Epiacanthus stramineus, Empoasca onukii, Nephotettix cincticeps, Laodelphax striatella, Nilaparvata lugens, Sogatella furcifera, Diaphorina citri, Aphis gossypii, Aphis spiraecola, Aulacorthum solani, Brevicoryne brassicae, Eriosoma lanigerum, Myzus persicae, Rhopalosiphum nymphaeaeae, Bemisia tabaci, Trialeurodes vaporariorum, Pseudococcus comstocki, Ceroplastes ceriferus, Ceroplastes rubens, Trigonotylus caelestialium, Stephanitis nashi, Eysarcoris lewisi, Eysarcoris ventralis, Plautia crossota stali, Leptocorisa chinensis, Riptortus clavatus, Eurydema rugosa, Halyomorpha mista, Nezara viridula, Togo hemipterus, Empoasca fabae, Dialeurodes citri, Icerya purchasi, Unaspis yanonensis, Aleurocanthus spiniferus, Cimex lectularius,* etc.

*Thysanoptera: Frankliniella intonsa, Frankliniella occidentalis, Scirtothrips dorsalis, Thrips palmi, Thrips tabaci,* etc.

*Diptera: Dacus dorsalis, Dacus cucurbitae, Ceratitis capitata, Liriomyza trifolii, Chromatomyia horticola, Liriomyza sativae, Hylemya platura, Delia antiqua, Rhagoletis pomonella, Mayetiola destructor, Musca domestica, Stmoxys calcitrans, Melophagus ovinus, Hypoderma lineatum, Hypoderma bovis, Oestrus ovis, Glossina palpalis, Glossina morsitans, Prosimulium yezoensis, Tabanus trigonus, Telmatoscopus albipunctatus, Leptoconops nipponensis, Culex pipiens pallens, Aedes albopicutus, Aedes aegypti, Anopheles hyracanus sinesis,* etc.

*Hymenoptera:Apethymus kuri, Athalia rosae japonensis, Neodiprion sertifer, Dryocosmus kuriphilus, Eciton burchelli, Eciton schmitti, Camponotus japonicus, Vespa mandarina, Myrmecia* spp., *Solenopsis* spp., *Monomorium pharaonis,* etc.

*Blattodea: Periplanetafuliginosa, Periplaneta japonica, Blattella germanica,* etc.

*Orthoptera: Teleogryllus emma, Gryllotalpa africana, Locusta migratoria, Oxya yezoensis, Schistocerca gregaria,* etc.

*Isoptera: Coptotermes formosanus, Reticulitermes speratus, Odontotermes formosanus,* etc.

*Siphonaptera: Ctenocephalidae felis, Pulex irritans, Xenopsylla cheopis,* etc.

*Psocodea: Menacanthus stramineus, Bovicola bovis,* etc.

*Phthiraptera: Haematopinus eurysternus, Linognathus vituli, Solenopotes capillatus,* etc.

*Acari: Panonychus citri, Panonychus ulmi, Tetranychus kanzawai, Tetranychus urticae,* etc.

*Eriophyidae: Aceria tulipae, Aculops lycopersici, Aculops pelekassi,* etc.

*Acaridae: Rhizoglyphus robini, Tyrophagus similis,* etc.

*Tarsonemidae: Polyphaotarsonemus latus,* etc.

Bee mites: *Varroa jacobsoni,* etc.

*Ixodidae: Boophilus microplus, Haemaphysalis longicornis,* etc.

*Psoroptidae: Psoroptes ovis,* etc.

*Sarcoptidae: Sarcoptes scabiei,* etc.

In addition, crustaceans: *Armadillidium vulgare,* etc.

Nematodes: *Meloidogyne incognita, Meloidogyne hapla, Globodera rostochiensis, Heterodera glycines, Prathylenchus penetrans, Prathylenchus vulnus, Aphelenchoides besseyi, Bursaphelenchus xylophilus,* etc.

In addition, mollusks: *Ponacea canaliculata, Incilaria bilineata, Acusta despecta sieboldiana, Lehmannina val-*

*entiana,* etc.

In one embodiment of the present invention, examples of the plants (crops) to which the composition is applied include, but are not particularly limited to, grains (e.g., rice, wheat, barley, corn, buckwheat), potatoes (e.g., potato, sweet potato, taros, yam), legumes (e.g., soybean, bean, azuki bean, pea), vegetables (e.g., cucumber, tomato, eggplant, bell pepper, cabbage, Chinese cabbage, radish, lettuce, carrot, leek, onion, strawberry, spinach, celery), fruits (e.g., apple, pear, cherry, peach, grape, persimmon, citrus, kiwi), specialty crops (e.g., cotton, rape, sunflowers, beets, sugarcane, tobacco), turf, trees, or ornamental plants (e.g., rose, chrysanthemum, tulip, gypsophila, Texas bluebell). In one embodiment of the present invention, the composition can also be used for crops that have been transformed by techniques such as genetic modification as well.

In one embodiment of the present invention, the amount of composition applied can be determined, if appropriate, according to the above pests and crops.

In one embodiment of the present invention, the composition may be used to directly apply the composition to plants. In addition, in one embodiment of the present invention, the composition may be used as a form of agent suitable for an insecticide for agricultural or horticultural use, such as granules, powdery granules, fine granules, soluble concentrate, water soluble powder, oils, emulsion, spreading oil, emulsion, microemulsion, suspo-emulsion, EW (Emulsion oil in Water) preparations, microcapsules, wettable powders, suspensions, flowable, tablets, water dispersible granule, dry flowable, wettable granule, aerosols, pastes, cyclodextrin preparations, jumbos, packs, water-soluble packaged preparations, dust, smoking agents, or fumigants. In one embodiment of the present invention, the composition may be diluted with an inert liquid or solid carrier and used as an agent optionally admixed with a surfactant, a dispersant, and/or other auxiliary agents. Specific examples of the preparation include a formulation such as granules, dust, wettable powder, water dispersible granule, suspension, or emulsion.

In one embodiment of the present invention, the composition may contain additives normally used in agrochemical formulations if necessary. Examples of the additives include carriers (e.g., solid carriers, liquid carriers), surfactants, binders, tackifiers, thickeners, coloring agents, spreading agents, anti-freezing agents, anti-caking agents, disintegrants, anti-degradation agents, and/or preservatives. Other additive ingredients such as preservatives and plant fragments may be used as necessary. One kind of the additives may be used singly, or two or more kinds thereof may be used in combination.

Examples of the solid carriers include:

natural minerals (e.g., quartz, clay, kaolinite, pyrophyllite, sericite, talc, chalk, bentonite, attapulgite, montmorillonite, acid leucite, zeolite, natural rock, diatomaceous earth, calcite, marble, pumice, seafoam stone, dolomite);
inorganic salts (e.g., calcium carbonate, ammonium sulfate or other ammonium salts, sodium sulfate, potassium chloride);
organic solid carriers (e.g., starch, cellulose, plant powder);
plastic carriers (e.g., polyethylene, polypropylene, polyvinylidene chloride); or
others (e.g., synthetic silicic acid, synthetic silicates, alumina, micronized silica, silicate). They may be used singly, or two or more kinds thereof may be used in combination.

Examples of the liquid carriers include:

alcohols, which are largely classified into monovalent alcohols (e.g., methanol, ethanol, propanol, isopropanol, butanol) and polyvalent alcohols (e.g., ethylene glycol, diethylene glycol, propylene glycol, hexylene glycol, polyethylene glycol, polypropylene glycol, glycerin);
polyhydric alcohol derivatives (e.g., propylene-based glycol ethers);
ketones (e.g., acetone, methyl ethyl ketone, methyl isobutyl ketone, diisobutyl ketone, cyclohexanone, isophorone);
ethers (e.g., ethyl ether, dioxane, cellosolve, dipropyl ether, tetrahydrofuran);
aliphatic hydrocarbons (e.g., normal paraffin, naphthene, isoparaffin, kerosene, mineral oil);
aromatic hydrocarbons (e.g., benzene, toluene, xylene, solvent naphtha, alkyl naphthalene);
halogenated hydrocarbons (e.g., dichloroethane, chloroform, carbon tetrachloride);
esters (e.g., ethyl acetate, diisopropyl phthalate, dibutyl phthalate, dioctyl phthalate, dimethyl adipate);
lactones (e.g., γ-butyrolactone);
amides (e.g., dimethyl formamide, diethyl formamide, dimethylacetamide, N-alkyl pyrrolidine);
nitriles (e.g., acetonitrile);
sulfur compounds (e.g., dimethyl sulfoxide);
vegetable oils (e.g., soybean oil, rapeseed oil, cottonseed oil, castor oil); or
water. They may be used singly, or two or more kinds thereof may be used in combination.

The surfactants are not particularly limited, and are preferably gelatinizing or swollen in water. Examples of the

surfactants include:

nonionic surfactants (e.g., a sorbitan fatty acid ester, polyoxyethylene sorbitan fatty acid ester, sucrose fatty acid ester, polyoxyethylene fatty acid ester, polyoxyethylene resin acid ester, polyoxyethylene fatty acid diester, polyoxyethylene alkyl ether, polyoxyethylene alkyl phenol ether, polyoxyethylene dialkyl phenyl ether, polyoxyethylene alkyl phenol formalin condensate, polyoxyethylene polyoxypropylene block polymer, alkyl polyoxyethylene polypropylene block polymer ether, polyoxyethylene alkylamine, polyoxyethylene fatty acid amide, polyoxyethylene fatty acid bisphenyl ether, polyalkylene benzyl phenyl ether, polyoxyalkylene styrene phenyl ether, acetylenediol, polyoxyalkylene adducted acetylenediol, polyoxyethylene ether-type silicone, ester-type silicone, fluorosurfactant, polyoxyethylene castor oil, polyoxyethylene hardened castor oil);
anionic surfactants (e.g., an alkyl sulfate, polyoxyethylene alkyl ether sulfate, polyoxyethylene alkyl phenyl ether sulfate, alkyl benzene sulfonate, lignin sulfonate, alkyl sulfosuccinate, naphthalene sulfonate, alkyl naphthalene sulfonate, formalin condensed salt of naphthalene sulfonate, formalin condensed salt of alkyl naphthalene sulfonate, fatty acid salt, polycarboxylate, N-methyl-fatty acid sarcosinate, resin acid salt, polyoxyethylene alkyl ether phosphate, polyoxyethylene alkyl phenyl ether phosphate);
cationic surfactants (e.g., laurylamine hydrochloride, stearylamine hydrochloride, oleylamine hydrochloride, stearylamine acetate, stearylaminopropylamine hydrochloride, alkyl amine salt (e.g., alkyl trimethylammonium chloride, alkyl dimethyl benzalkonium chloride)); or
amphoteric surfactants (e.g., an amino acid-type or betaine-type one). One kind of the surfactants may be used singly, or two or more kinds thereof may be used in combination.

Examples of the binder or tackifier include carboxymethylcellulose and its salt, dextrin, water-soluble starch, xanthan gum, guar gum, sucrose, polyvinylpyrrolidone, gum Arabic, polyvinyl alcohol, polyvinyl acetate, sodium polyacrylate, polyethylene glycol with an average molecular weight of 6,000 to 20,000, polyethylene oxide with an average molecular weight of 100,000 to 5,000,000, or natural phospholipid (e.g., cephalic acid, lecithinic acid). One kind of the binder or tackifier may be used singly, or two or more kinds thereof may be used in combination.
Examples of the thickeners include:

water-soluble polymers (e.g., xanthan gum, guar gum, carboxymethylcellulose, polyvinylpyrrolidone, a carboxyvinyl polymer, an acrylic polymer, a starch derivative, polysaccharides); or
inorganic micropowder (e.g., high-purity bentonite, white carbon). One kind of the thickeners may be used singly, or two or more kinds thereof may be used in combination.

Examples of the coloring agents include:

inorganic pigments (e.g., iron oxide, titanium oxide, prussian blue); or
organic dyes (e.g., alizarin dye, azo dye, metal phthalocyanine dye). One kind of the coloring agents may be used singly, or two or more kinds thereof may be used in combination.

Examples of the spreading agents include:
silicone-based surfactants, cellulose powder, dextrin, processed starch, polyaminocarboxylic acid chelators, cross-linked polyvinylpyrrolidone, copolymers of maleic acid, styrenic acid, and methacrylic acid, half esters of polymers of polyhydric alcohols and dicarboxylic anhydrides, or water-soluble salts of polystyrene sulfonic acid. One kind of the spreading agents may be used singly, or two or more kinds thereof may be used in combination.
Examples of the spreaders include:

various surfactants (e.g., sodium dialkyl sulfosuccinate, polyoxyethylene alkyl ether, polyoxyethylene alkyl phenyl ether, polyoxyethylene fatty acid ester); or
paraffin, terpene, polyamide resin, polyacrylate, polyoxyethylene, wax, polyvinyl alkyl ether, an alkyl phenol formalin condensation product, or synthetic resin emulsion. One kind of the spreaders may be used singly, or two or more kinds thereof may be used in combination.

Examples of the anti-freezing agents include polyhydric alcohols (e.g., ethylene glycol, diethylene glycol, propylene glycol, glycerin). One kind of the anti-freezing agents may be used singly, or two or more kinds thereof may be used in combination.
Examples of the anti-caking agents include polysaccharides (e.g., starch, alginate, mannose, galactose), polyvinylpyrrolidone, white carbon, ester gum, or petroleum resin. One kind of the anti-caking agents may be used singly, or two or more kinds thereof may be used in combination.

Examples of the disintegrants include sodium tripolyphosphate, sodium hexanemetaphosphate, metallic stearate, cellulose powder, dextrin, copolymers of methacrylates, polyvinylpyrrolidone, polyaminocarboxylic acid chelators, sulfonated styrene-isobutylene-maleic anhydride copolymers, or starch-polyacrylonitrile graft copolymers. One kind of the disintegrants may be used singly, or two or more kinds thereof may be used in combination.

Examples of the anti-degradation agents include

desiccants (e.g., zeolite, quicklime, magnesium oxide);
antioxidants (e.g., a phenol-based, amine-based, sulfur-based, or phosphoric acid-based antioxidant); or
UV absorbers (e.g., a salicylic acid-based, benzophenone-based UV absorber).

One kind of the anti-degradation agents may be used singly, or two or more kinds thereof may be used in combination.

Examples of the preservatives include potassium sorbate or 1,2-benzthiazolin-3-one. One kind of the preservatives may be used singly, or two or more kinds thereof may be used in combination.

In one embodiment of the present invention, the composition contains, as co-ingredients, ingredients (e.g., insecticides, acaricides, nematicides, snailicides, feeding inhibitors) known from the Pesticide Manual (2013) published by the British Crop Protection Council, the Kumiai Pesticide Handbook (2018) published by the ZEN-NOH, or the SHIBUYA INDEX (17th edition) published by the ZENNOKYO. This makes it possible to form a multi-component pest control agent that provides an even broader range of agricultural protection. Examples of the co-ingredients are shown below, but are not limited to them.

Examples of the insecticides, acaricides, nematicides, snailicides or feeding inhibitors include 1,2-dichloropropane, 1,3-dichloropropene, abamectin, acephate, acequinocil, acetamiprid, acetion, acetoprol, acrinathrin, afidopyropen, alanycarb, aldicarb, aleslin, allicin, allosamidin, alixicarb, alphacypermethrin, alpha-endosulfan, amidithione, amidoflumet, aminocarb, amitraz, anabasine, alamite, athidathion, azadirachtin, azamethiphos, azinphos ethyl, azinphos methyl, azocyclotine, azotoate, barthrin, benclothiaz, benziocarb, benfuracarb, benoxaphos, bensultap, benzoximate, benzyl benzoate, beta-cyfluthrin, beta-cypermethrin, bifenazate, bifenthrin, bifujunzhi, binapacryl, bioallethrin, bioresmethrin, bistrifluron, borax, boric acid, broflanilide, bromethrin, bromfenvinfos, bromocyclen, bromophos, bromophosethyl, bromopropylate, bufencarb, buprofezin, butacarb, butathiophos, butoxycarboxime, butonate, polyoxine complex, cadusafos, calcium polysulfate, calvinphos, camphechlor, carbanolate, carbaryl, carbofuran, carbon disulfide, carbon tetrachloride, carbonyl sulfide, carbophenothione, carbosulfan, cartap, carbachlor, quinomethionate, chloramine phosphorous, chlorantraniliprole, chlordane, chlorbenside, chlorbenzuron, chlorbicyclene, chlordecone, chloretoxifos, chlorfenapyr, chlorfenetol, chlorfenson, chlorfensulfide, chlorfenvinphos, chlorfluazuron, chlormephos, chloromebuform, chloromethiuron, chloropicrin, chloropropylate, chlorfoxime, chlorprazophos, chlorpyrifos, chlorpyrifos-methyl, chlorthiophos, chromafenozide, cinerin I, cinerin II, cinerin complex, cismethrin, clenpyrine, cloetocarb, clofentezine, closantel, clothianidin, corophonate, copper naphthenate, copper oleate, copper sulfate, coumaphos, coumithoate, CPMC, crotamiton, crotoxyphos, crufomate, cryolite, cyanophenphos, cyanophos, cyanthoate, cyanthraniliprole, cyclaniliprole, cycloprothrin, cyenopyrafen, cyflumetofen, cyfluthrin, cyhalodiamide, cyhalothrin, cyhexatin, cymiazole, cypermethrin, cyromazine, cythioate, dayoutong, dazomet, DBCP, chloropicrin, DCIP, decarbofuran, deltamethrin, demephion, demephion O, demephion S, demeton, demeton S methyl, diafenthiuron, dialifos, diamidaphos, diatomaceous earth, diazinon, dicapton, diclofenthione, diclofluanide, dichlorvos, dicloromezotiaz, dicohol, dicrotophos, dicyclanil, dienochlor, diflobidazine, diflubenzuron, dimefluthrin, dimefox, dimethane, dimetacarb, dimethoate, dimethrin, dimethylvinphos, dimethylan, dinex, dinobutone, dinocup, dinocton, dinopenton, dinoprop, dinosam, dinosulfone, dinotefuran, dinoterbon, diofenolan, dioxabenzophos, dioxacarb, dioxathione, diphenylsulfone, dipymetitrone, disulfiram, disulfoton, dicyclophos, d-limonene, DNOC, dofenapyn, doramectin, ecdysterone, emamectin, EMPC, empenthrin, endosulfan, endothione, endrin, EPN, eprinomectin, monfluorothrin, fenvalerate, esfenvalerate, ethaphos, ethiofencarb, ethion, ethiprol, methyl ethoate, ethoprophos, ethyl formate, ethylene dibromide, ethylene dichloride, etofenprox, etoxazole, etrimphos, fanfur, fenamiphos, fenazaflor, fenazaquin, fenbutatin oxide (FBTO), fenchlorphos, fenetacarb, fenfluthrin, fenitrothion, fenobcarb,fenothiocarb, fenoxacrim, fenoxycarb, fenpirithrin, fenpropathrin, fenpyroximate, fenson, fensulfothione, fenthion, fentrifanil, fenvalerate, ferric phosphate, fipronil, flometoquin, flonicamid, fluacrypyrim, fluazaindolizine, fluazuron, flubendiamide, flubendimine, flucofuron, flucycloxuron, flucitrinate, fluenethyl, fluenesulfone, flufenerim, flufenoxuron, flufenprox, flufiprole, fluhexaphon, flumethrin, fluorbencide, flupyradifuron, fluralaner, flursulamide, fluvalinate, fluxametamide, fonofos, formetanate, formetanate hydrochloride, formothione, formparanate, fosmethilan, fospirate, fosthiazate, fosthietan, furamethrin, furantebufenozide, furathiocarb, furethrin, furfural, gamma-cyhalothrin, halofenprox, halofenozide, HCH, HEOD, heptafluthrin, heptenophos, hexachlorophen, hexaflumuron, hexithiazox, HHDN, hydramethylnon, hydroprene, hyquincarb, imicyafos, imidacloprid, Imidaclothiz, imiprothrin, indoxacarb, IPSP, isamidofos, isazofos, isobenzan, isocarbophos, isodrine, isophenphos, isophenphos-methyl, isolan, isoprocarb, isoprothiolane, isothioate, isoxathion, iprodione, ivermectin, jasmolin I, jasmolin II, jia huang chong zong, jodofenphos, juvenile hormone I, juvenile hormone II, juvenile hormone III, kadethrin, bifenthrin, karanjin, kelevan, kinoprene, salicylic acid, methyl salicylate, lambda-cyhalothrin, lepimectin, leptophos, lirimphos, lufenuron, lythidathion, malathion, malonoben, maltodextrin,

matrin, mazidox, mecarbam, mecarphon, menazon, meperfluthrin, mephosfolan, mesulfen, mesulfenfos, metaflumizone, metaldehyde, metam, methacrifos, methamidophos, methidathion, methiocarb, methocrotophos, methomyl, methoprene, methothrin, methoxychlor, methoxyfenozide, methyl iodide, methyl isothiocyanate, metofluthrin, metolcarb, metoxadiazone, mevinphos, mexacarbate, milbemectin, mipafox, mirex, monocrotophos, momfluorothrin, morphothion, moxidectin, naftalofos, naled, naphthalene, niclosamide, nicotine, nifluridide, nitenpyram, nithiazine, nitrilacarb, novaluron, noviflumuron, omethoate, oxamyl, oxydemeton-methyl, oxydeprofos, oxydisulfoton, oxymatrine, paichongding, para-dichlorobenzen, penfluron, pentachlorophenol, permethrin, phenkapton, phenothrin, phenproxide, phenthoate, phorate, phosalone, phosfolan, phosmet, phosphamidon, phosnichlor, phosphine, phosphocarb, phoxim, phoxim-methyl, pirimetaphos, pirimicarb, pirimioxyphos, pirimiphos-ethyl, pirimiphos-methyl, potassium thiocyanate, prallethrin, precocene I, precocene II, precocene III, primidophos, proclonol, profenofos, profluthrin, promacyl, promecarb, propaphos, propargite, propetamphos, propoxur, prothidathion, prothiofos, prothoate, protrifenbute, pyflubumide, pymetrozine, pyraclofos, pyrafluprole, pyrazophos, pyrazothion, pyresmethrin, pyrethrin, pyridaben, pyridalyl, pyridaphenthion, pyrifluquinazon, pyrimidifen, pyrimitate, pyriprole, pyriproxyfen, pyrolan, quinalphos, quinalphos-methyl, quinothion, quintiofos, rafoxanide, resmethrin, rhodojaponin-III, rotenone, ryania, sabadilla, sanguinarine, schradan, selamectin, silafluofen, silica gel, sodium fluoride, sodium hexafluorosilicate, sodium thiocyanate, sophamide, spinetoram, spinosad, spirodiclofen, spiromesifen, spirotetramat, sulcofuron, sulfiram, sulfluramid, sulfotep, sulfoxaflor, sulfoxime, sulfur, sulfuryl fluoride, sulprofos, tau-fluvalinate, tazimcarb, TDE, tebufenozide, tebufenpyrad, tebupirimfos, teflubenzuron, tefluthrin, temephos, TEPP, terallethrin, terbufos, tetrachloroethane, tetrachlorvinphos, tetradifon, tetramethrin, tetramethylfluthrin, tetranactin, tetraniliprole, tetrasul, thiacloprid, thiamethoxam, thiapronil, thiocarboxime, thiocyclam, thiodicarb, thiofanox, thiometon, thionazin, thioquinox, thiosultap, tioxazafen, tirpate, tolfenpyrad, tralocythrin, tralomethrin, tralopyril, transfluthrin, transpermethrin, triarathene, triazamate, triazophos, trichlorfon, trichloronat, trifenmorph, trifenofos, triflumezopyrim, triflumuron, trimethacarb, triprene, triptolide, vamidothion, vaniliprole, xiao chong liu lin, XMC, xylenols, xylylcarb, yishijing, zolaprofos, $\alpha$-ecdysone, acynonapyr, flupyrimin, spiropidion, benzpyrimoxan, tyclopyrazoflor, oxazosulfyl, etc. One kind of the compounds may be used singly, or two or more kinds thereof may be used in combination.

In one embodiment of the present invention, the composition may also contain, as co-ingredients, at least one biologically active ingredient optionally selected from a plant growth regulator (e.g., a root promoter) or a fertilizer (e.g., plant nutrients). This also makes it possible to form a multi-component pest control agent that provides an even broader range of agricultural protection.

One aspect of the present invention provides a composition comprising prumycin or a salt thereof or kanosamine or a salt thereof for application to plants containing the gene for expressing an insecticidal protein derived from *Bacillus thuringiensis* (hereinafter referred to as "BT plants"). Here, examples of the BT plants include KnockOut (registered trademark), NatureGard (registered trademark), Bollgard (registered trademark), Agrisure (registered trademark) CB, YieldGard Corn Rootworm (registered trademark), Herculex I (registered trademark), Bollgard II (registered trademark), YieldGard Plus (registered trademark), VipCot (registered trademark), WideStrike (registered trademark), Herculex RW (registered trademark), and Herculex Xtra (registered trademark), which control pests by expressing single or multiple insecticidal proteins in soybean, corn, cotton, or canola.

(Method of controlling agricultural or horticultural pest)

One aspect of the present invention provides a method of controlling an agricultural or horticultural pest, the method comprising the steps of:

(a) applying an insecticidal protein derived from *Bacillus thuringiensis* to a plant; and

(b) applying prumycin or a salt thereof or kanosamine or a salt thereof to the plant simultaneously, continuously, or separately with the insecticidal protein derived from *Bacillus thuringiensis.*

In addition, in one embodiment of the present invention, the control method includes separately applying, to the plant, the insecticidal protein derived from *Bacillus thuringiensis* and prumycin or a salt thereof or kanosamine or a salt thereof. Alternatively, an insecticidal composition for agricultural or horticultural use containing an insecticidal protein derived from *Bacillus thuringiensis* and prumycin or a salt thereof or kanosamine or a salt thereof may be applied to a plant. From the viewpoints of stability of insecticidal effect, rapid efficacy, and reduction of the risk of resistance development, it is preferable to use an insecticidal composition for agricultural or horticultural use containing an insecticidal protein derived from *Bacillus thuringiensis* and prumycin or a salt thereof or kanosamine or a salt thereof.

In one embodiment of the present invention, the plant to which the control method is applied refers to a plant or plant group (e.g., wild plants, raised plants, naturally occurring plants, cultivated plants). Examples also include a plant produced by breeding (e.g., introduction breeding, segregation breeding, crossbreeding, heterosis breeding, mutation breeding, ploidy breeding, genetic recombinant (transgenic) breeding, marker-assisted selection). The plant to be

treated may be either the whole plant or part thereof.

In one embodiment of the present invention, in the case of application to a plant in the control method, the application may be performed on the plant or an area around the plant. The area around the plant refers to soil (seeded soil), a paddy field, water for hydroponic culture, cultivation material, or the like.

Examples of the method of application to a plant can include atomizing, sprinkling, dusting, spraying, spreading, dipping, irrigation, pouring, water-sprinkling (submerging), foaming, coating, powder-coating, coating, spraying, smoking, fumigation, smoke and aerosol, or painting. Examples of the preferred method include soil mixing, irrigation, seed smear, seed dipping, or foliar spraying. These methods of application to a plant may be used singly or two or more kinds thereof may be used in combination.

When the composition is applied to control agricultural or horticultural pests in one embodiment of the present invention, the application can be carried out throughout the growing and storage periods of the plant. Here, in one embodiment of the present invention, the control method may target the entire or part of the plant. The part of the plant means the leaf, stem, trunk, branch, flower, fruit body, fruit, seed, root, tuber, or rhizome of a plant, or any combination thereof.

To control agricultural or horticultural pests in one embodiment of the present invention, the amount of the composition for treatment may be adjusted for use so that the amount is effective but not toxic to the plant. The amount that is effective but not toxic to the plant is the amount that can adequately control agricultural or horticultural pests and does not harm plants. This amount can vary over a relatively wide range depending on the agricultural or horticultural pests to be controlled, the plant to be applied, the natural environment in which the composition is used, and the ingredients of the composition.

In one embodiment of the present invention, in the control method, all configurations, as described above under the section (Insecticidal composition for agricultural or horticultural use), including the type and content of insecticidal protein, the species of *Bacillus thuringiensis* and its preparation method, the kind and content of prumycin or a salt thereof, and the kind and content of kanosamine or a salt thereof may be applied. All the configurations may be used singly or two or more thereof may be used in combination, and may then be likewise applied.

## EXAMPLES

Hereinafter, the present invention will be described in detail with reference to Production Example, Preparation Examples (Formulation Examples), and Test Examples. However, the present invention is not limited to these Examples.

(Production Example 1: To synthesize prumycin hydrochloride)

Prumycin hydrochloride was synthesized according to the method of Iwabuchi et al. (J. Carbohydr. Chem., 7, 605-616 (1988)). Specifically, D-arabinose (25 g) was subjected to respective steps including, in sequence, 1-O-benzylation, 3,4-O-isopropylidene acetal protection, 2-benzoylation, isopropylidene acetal deprotection, 4-selective azide substitution, benzoyl deprotection, epoxidation, ring opening amination, and N-Cbz protection. In this way, 4-azido-2-(benzyloxycarbonyl)amino-2,4-dideoxy-$\alpha$-L-arabinopyranoside was obtained (9.6 g; yield after the above 9 steps: 14%). The resulting compound (984 mg) was subjected to respective steps including, in sequence, azidoselective reduction, condensation with N-carbobenzoxy-D-alanine (N-Cbz-D-alanine), and reductive deprotection. In this way, prumycin hydrochloride was obtained (424 mg; yield after the above 4 steps: 59%).

(Preparation Example 1: Preparation of dried Btk culture or dried Bta culture)

The following procedure was used to prepare a dried *Bacillus thuringiensis* subsp. *kurstaki* culture (hereinafter, referred to as a "dried Btk culture") and a dried *Bacillus thuringiensis* subsp. *aizawai* culture (hereinafter, referred to as a "dried Bta culture"). Hereafter, the dried Btk culture and the dried Bta culture are collectively referred to as a "dried Bt culture".

A bacterial strain for preparing a dried Btk culture and a bacterial strain for preparing a dried Bta culture were isolated from Tune-Up (registered trademark) Water Dispersible Granule (*Bacillus thuringiensis* subsp. *kurstaki* (live spores of BT bacteria and 10% insecticidal protein)) (Agro Kanesho Co., Ltd.) and Zentari (registered trademark) Water Dispersible Granule (Sumitomo Chemical Co., Ltd.), respectively. Each of the strains obtained was cultured on a slant medium (slant) and stored at 4°C. Each strain was inoculated into 60 mL of ordinary bouillon broth (Eiken Chemical Co., Ltd.) by taking one inoculating loop of each strain after storage, and then each strain was cultured for 1 day at 180 rpm and 28°C while using a rotary shaker (pre-culture). Sixty mL of the culture broth obtained from the pre-culture was inoculated into 2 L of culture broth (soybean-derived protein powder: 4%, *Solanum tuberosum* starch: 2%, corn steep liquor: 1.5%, sodium carbonate: 0.0001%, pH 7.0), and the resulting broth was incubated at 30°C for 2 days with shaking (main culture). The culture broth obtained from the main culture was lyophilized and pulverized, and the resulting fine

powder was used as a dried Btk culture or a dried Bta culture, respectively.

The total percentage of insecticidal proteins in the obtained dried Btk culture or dried Bta culture was measured by purifying the insecticidal proteins by the precipitation separation method using dextran sulfate and polyethylene glycol by Goodman *et al.* (NPL 29) and then by HPLC according to the analytical method of Masson *et al.* (NPL30). The total percentage was 4 mass%.

(Preparation Example 2: Preparation of dried culture of bacteria producing prumycin or salt thereof or dried culture of bacteria producing kanosamine or salt thereof)

The following procedure was used to prepare a dried culture of bacteria producing prumycin or a salt thereof, or a dried culture of bacteria producing kanosamine or a salt thereof, with reference to the method of Stabb *et al.* (NPL 32).

One inoculating loop of *Bacillus cereus* strain or *Bacillus subtilis* strain isolated from soil was inoculated into 60 mL of ordinary bouillon broth (Eiken Chemical Co., Ltd.). Each strain was then incubated for 1 day at 180 rpm and 28°C while using a rotary shaker (pre-culture). Sixty mL of the culture broth obtained by the pre-culture was inoculated into 2 L of L-Broth medium and incubated with shaking under conditions at 180 rpm at 30°C for 3 days (main culture). The culture broth obtained from the main culture was lyophilized and pulverized. Each fine powder obtained was a dried culture of bacteria producing prumycin or a salt thereof or a dried culture of bacteria producing kanosamine or a salt thereof.

(Preparation Example 3: Preparation of wettable powder containing dried Btk culture and prumycin hydrochloride)

In the Examples, the term "part(s)" indicating the proportion used in the Preparation Examples refers to part(s) by weight unless otherwise specified.

Wettable powder containing a dried Btk culture and prumycin hydrochloride was obtained by mixing and pulverizing 45 parts of the dried Btk culture prepared in Preparation Example 1, 5 parts of prumycin hydrochloride prepared in Production Example 1, 20 parts of diatomaceous earth, 20 parts of white carbon, 8 parts of sodium lignin sulfonate, and 2 parts of sodium alkylnaphthalenesulfonate.

(Preparation Example 4: Preparation of wettable powder containing dried Btk culture and kanosamine hydrochloride)

Wettable powder containing a dried Btk culture and kanosamine hydrochloride was obtained by mixing and pulverizing 45 parts of the dried Btk culture prepared in Preparation Example 1, 5 parts of kanosamine hydrochloride (Sigma-Aldrich Japan, LLC), 20 parts of diatomaceous earth, 20 parts of white carbon, 8 parts of sodium lignin sulfonate, and 2 parts of sodium alkylnaphthalenesulfonate.

[Test Example 1: Test of efficacy against 3rd instar larvae of *Spodoptera litura*]

A suspension of dried Btk culture or dried Bta culture was prepared by adding distilled water to the dried Btk culture or dried Bta culture prepared in Preparation Example 1. This suspension was admixed with prumycin hydrochloride prepared in Production Example 1 or kanosamine hydrochloride (Sigma-Aldrich Japan, LLC) at the prescribed concentration to prepare a solution. The obtained solution was admixed with artificial feed (Insecta LFS (manufactured by Nosan Corporation)) as shown in Tables 1 to 6 so that the content of the dried Btk culture or Bta culture was 0.2 to 2 mg/g of the artificial feed and the content of prumycin hydrochloride or kanosamine hydrochloride was 2 $\mu$g/g of the artificial feed. The artificial feed containing the dried Btk culture or dried Bta culture mixed with prumycin hydrochloride or kanosamine hydrochloride was placed on a petri dish (90 mm in diameter and 15 mm in height), and ten 3rd instar larvae of *Spodoptera litura* reared in a rearing room at 25°C were released into the petri dish (triplicate). Each petri dish was closed and kept at 25°C for 5 days.

The number of dead insects was then macroscopically counted by observing the inside of the petri dish, and the (measured) insecticidal rate (%) of the number of dead insects to the total number of reared insects was determined.

In addition, the suspension of dried Btk culture alone, the suspension of dried Bta alone, prumycin hydrochloride alone, kanosamine hydrochloride alone, or a combination of prumycin hydrochloride and kanosamine hydrochloride was added to the artificial feed to achieve the application concentration per g of the artificial feed as shown in Tables 1 to 6. Except the above, ten 3rd instar larvae of *Spodoptera litura* were released into a petri dish (triplicate) and kept at 25°C for 5 days, as in the above Example.

The inside of the petri dish was then observed and the (measured) insecticidal rate (%) was determined in the same way as in the above Example.

The expected theoretical insecticidal rate (%) when treated with the dried Btk culture or dried Bta culture mixed with prumycin hydrochloride or kanosamine hydrochloride was determined by Colby's calculation formula ($E = X + Y - (X + Y/100)$).

In the formula, X, Y, and E mean the following:

X: insecticidal rate (%) when treated with M ppm of active ingredient A;
Y: insecticidal rate (%) when treated with N ppm of active ingredient B; and
E: expected theoretical insecticidal rate (%) when treated with M ppm of active ingredient A and N ppm of active ingredient B.

The presence or absence of synergistic effect was determined by comparing the theoretical and measured insecticidal rates (%) in the case of using the dried Btk culture or dried Bta culture in combination with prumycin hydrochloride or kanosamine hydrochloride. Specifically, the case where the measured value was larger than the theoretical value was judged as "having a synergistic effect", and the case where the measured value was equal to or smaller than the theoretical value was judged as "having no synergetic effect" with respect to the insecticidal rate (%).

Tables 1 to 6 below show the test results obtained.

[Table 1]

| Agent(s) tested | Application concentration | Theoretical insecticidal rate (%) | Measured insecticidal rate (%) | Presence or absence of synergistic effect Judgment result |
|---|---|---|---|---|
| Dried Btk culture<br>Prumycin hydrochloride | 2 mg/g Feed<br>2 μg/g Feed | 30.0 | 100.0 | Present |
| Dried Btk culture<br>Prumycin hydrochloride | 1 mg/g Feed<br>2 μg/g Feed | 10.0 | 80.0 | Present |
| Dried Btk culture | 2 mg/g Feed | - | 30.0 | - |
| Dried Btk culture | 1 mg/g Feed | - | 10.0 | - |
| Prumycin hydrochloride | 2 μg/g Feed | - | 0.0 | - |
| *The upper row in the column of application concentration means the concentration of dried Btk culture, and the lower row means the concentration of prumycin hydrochloride. If the application concentration of dried Btk culture is 2 mg/g feed, the total content of insecticidal protein contained in the dried Btk culture is 80 μg/g feed. | | | | |

[Table 2]

| Agent(s) tested | Application concentration | Theoretical insecticidal rate (%) | Measured insecticidal rate (%) | Presence or absence of synergistic effect Judgment result |
|---|---|---|---|---|
| Dried Btk culture<br>Kanosamine hydrochloride | 2 mg/g Feed<br>2 μg/g Feed | 30.0 | 100.0 | Present |
| Dried Btk culture<br>Kanosamine hydrochloride | 1 mg/g Feed<br>2 μg/g Feed | 10.0 | 60.0 | Present |
| Dried Btk culture | 2 mg/g Feed | - | 30.0 | - |
| Dried Btk culture | 1 mg/g Feed | - | 10.0 | - |

(continued)

| Agent(s) tested | Application concentration | Theoretical insecticidal rate (%) | Measured insecticidal rate (%) | Presence or absence of synergistic effect Judgment result |
|---|---|---|---|---|
| Kanosamine hydrochloride | 2 μg/g Feed | - | 0.0 | - |
| *The upper row in the column of application concentration means the concentration of dried Btk culture, and the lower row means the concentration of kanosamine hydrochloride. If the application concentration of dried Btk culture is 2 mg/g feed, the total content of insecticidal protein contained in the dried Btk culture is 80 μg/g feed. | | | | |

[Table 3]

| Agent(s) tested | Application concentration | Theoretical insecticidal rate (%) | Measured insecticidal rate (%) | Presence or absence of synergistic effect Judgment result |
|---|---|---|---|---|
| Dried Btk culture<br>Prumycin hydrochloride<br>Kanosamine hydrochloride | 2 mg/g Feed<br>2 μg/g Feed<br>2 μg/g Feed | 30.0 | 100.0 | Present |
| Dried Btk culture | 2 mg/g Feed | - | 30.0 | - |
| Prumycin hydrochloride | 2 μg/g Feed | - | 0.0 | - |
| Kanosamine hydrochloride | 2 μg/g Feed | - | 0.0 | - |
| *The upper row in the column of application concentration means the concentration of dried Btk culture, the middle row means the concentration of prumycin hydrochloride, and the lower row means the concentration of kanosamine hydrochloride. If the application concentration of dried Btk culture is 2 mg/g feed, the total content of insecticidal protein contained in the dried Btk culture is 80 μg/g feed. | | | | |

[Table 4]

| Agent(s) tested | Application concentration | Theoretical insecticidal rate (%) | Measured insecticidal rate (%) | Presence or absence of synergistic effect Judgment result |
|---|---|---|---|---|
| Dried Bta culture<br>Prumycin hydrochloride | 0.5 mg/g Feed<br>2 μg/g Feed | 80.0 | 100.0 | Present |
| Dried Bta culture<br>Prumycin hydrochloride | 0.2 mg/g Feed<br>2 μg/g Feed | 30.0 | 80.0 | Present |
| Dried Bta culture | 0.5 mg/g Feed | - | 80.0 | - |
| Dried Bta culture | 0.2 mg/g Feed | - | 30.0 | - |

(continued)

| Agent(s) tested | Application concentration | Theoretical insecticidal rate (%) | Measured insecticidal rate (%) | Presence or absence of synergistic effect Judgment result |
|---|---|---|---|---|
| Prumycin hydrochloride | 2 μg/g Feed | - | 0.0 | - |
| *The upper row in the column of application concentration means the concentration of dried Bta culture, and the lower row means the concentration of prumycin hydrochloride. If the application concentration of dried Bta culture is 0.5 mg/g feed, the total content of insecticidal protein contained in the dried Bta culture is 20 μg/g feed. | | | | |

[Table 5]

| Agent(s) tested | Application concentration | Theoretical insecticidal rate (%) | Measured insecticidal rate (%) | Presence or absence of synergistic effect Judgment result |
|---|---|---|---|---|
| Dried Bta culture<br>Kanosamine hydrochloride | 0.5 mg/g Feed<br>2 μg/g Feed | 80.0 | 100.0 | Present |
| Dried Bta culture<br>Kanosamine hydrochloride | 0.2 mg/g Feed<br>2 μg/g Feed | 30.0 | 80.0 | Present |
| Dried Bta culture | 0.5 mg/g Feed | - | 80.0 | - |
| Dried Bta culture | 0.2 mg/g Feed | - | 30.0 | - |
| Kanosamine hydrochloride | 2 μg/g Feed | - | 0.0 | - |
| *The upper row in the column of application concentration means the concentration of dried Bta culture, and the lower row means the concentration of kanosamine hydrochloride. If the application concentration of dried Bta culture is 0.5 mg/g feed, the total content of insecticidal protein contained in the dried Bta culture is 20 μg/g feed. | | | | |

[Table 6]

| Agent(s) tested | Application concentration | Theoretical insecticidal rate (%) | Measured insecticidal rate (%) | Presence or absence of synergistic effect Judgment result |
|---|---|---|---|---|
| Dried Bta culture<br>Prumycin hydrochloride<br>Kanosamine hydrochloride | 0.5 mg/g Feed<br>2 μg/g Feed<br>2 μg/g Feed | 80.0 | 100.0 | Present |
| Dried Bta culture | 0.5 mg/g Feed | - | 80.0 | - |
| Prumycin hydrochloride | 2 μg/g Feed | - | 0.0 | - |
| Kanosamine hydrochloride | 2 μg/g Feed | - | 0.0 | - |
| *The upper row in the column of application concentration means the concentration of dried Bta culture, the middle row means the concentration of prumycin hydrochloride, and the lower row means the concentration of kanosamine hydrochloride. If the application concentration of dried Bta culture is 0.5 mg/g feed, the total content of insecticidal protein contained in the dried Bta culture is 20 μg/g feed. | | | | |

The results of Tables 1-6 have demonstrated that when prumycin hydrochloride alone or kanosamine hydrochloride alone was used at an application concentration of 2 μg/g feed, no insecticidal efficacy against the 3rd instar larvae of *Spodoptera litura* was observed. By contrast, the dried Btk culture or dried Bta culture was used in combination with prumycin hydrochloride or kanosamine hydrochloride. This markedly increased the insecticidal rate for 3rd instar larvae of *Spodoptera litura* when compared to the case of application using the dried Btk culture alone or dried Bta culture alone, resulting in extremely high insecticidal efficacy. These results have demonstrated that the dried Btk culture or dried Bta culture can be used in combination with prumycin hydrochloride or kanosamine hydrochloride to exert a synergistic effect on the insecticidal efficacy.

[Test Example 2: Field test on *Spodoptera litura*]

The following agents were used and tested in this Test Example.

·BT bacteria preparation: Tune-Up (registered trademark) Water Dispersible Granule (*Bacillus thuringiensis* subsp. *kurstaki* (live spores of BT bacteria and 10% insecticidal protein)) (Agro Kanesho Co., Ltd.)
·Dried culture of bacteria producing prumycin or a salt thereof as prepared in Preparation Example 2 above.
·Dried culture of bacteria producing kanosamine or a salt thereof as prepared in Preparation Example 2 above.

The above BT bacteria preparation and a dried culture of bacteria producing prumycin or a salt thereof or a dried culture of bacteria producing kanosamine or a salt thereof were mixed at the prescribed concentrations, and the mixture was diluted with water to obtain a diluted liquid. The diluted liquid obtained was admixed with a spreader (Breakthrough (registered trademark), Sankei Chemical Co., LTD) in a 1/5000 weight based on the weight of the diluted liquid to prepare an agent liquid. The dilution factor of each test agent in each agent liquid obtained was 2,000- or 20,000-fold, as shown in Table 7.

The insecticidal proteins contained in the above BT bacteria preparation are Cry1Aa, Cry1Ab, Cry1Ac, and Cry2A. The concentration of insecticidal proteins (the total content (concentration) of insecticidal proteins that could be the active ingredient) in the agent liquid, which was diluted 2000 times the BT bacteria preparation, was determined by HPLC according to the analytical method of Masson *et al.* (NPL 30), and was 24 ppm.

Regarding an agent liquid that was diluted 2,000 times the dried culture of bacteria producing prumycin or a salt thereof or the dried culture of bacteria producing kanosamine or a salt thereof among the agent liquids obtained, the concentration of prumycin or a salt thereof or kanosamine or a salt thereof in the agent liquid was determined by CE-TOF-MS according to the analytical method of Tanaka *et al.* (NPL 31). The concentration of prumycin or kanosamine was 5 ppm (as prumycin) or 5 ppm (as kanosamine), respectively. Among the agent liquids obtained, an agent liquid, in which the dried culture of bacteria producing prumycin or a salt thereof or the dried culture of bacteria producing kanosamine or a salt thereof was diluted 20,000 times, was considered to have a prumycin concentration of 0.5 ppm (as prumycin) or a kanosamine concentration of 0.5 ppm (as kanosamine).

From the above, the ratio (mass ratio) of the concentration of insecticidal proteins to the concentration of prumycin or kanosamine in the agent liquid, in which the BT bacteria preparation was diluted 2,000 times and the dried culture of bacteria producing prumycin or a salt thereof or the dried culture of bacteria producing kanosamine or a salt thereof was diluted 2,000 times, was 4.8:1. The ratio (mass ratio) of the concentration of insecticidal proteins to the concentration of prumycin or kanosamine in the agent liquid, in which the BT bacteria preparation was diluted 2,000 times and the dried culture of bacteria producing prumycin or a salt thereof or the dried culture of bacteria producing kanosamine or a salt thereof was diluted 20,000 times, was 48: 1.

In addition, each of the above test agents (BT bacteria preparation, dried culture of bacteria producing prumycin or a salt thereof, and dried culture of bacteria producing kanosamine or a salt thereof) was used alone and diluted with water in the same way as in the above Example. A spreader was then added to prepare each agent liquid containing each test agent alone.

Four cabbage plants (cultivar: Ayamine) with 6 to 7 main leaves were planted per 0.72 $m^2$ (1.2 m $\times$ 0.6 m) plot in two rows with 60 cm apart between plants. One month after planting, each agent liquid prepared as described above was sprayed at a 300 L/10a equivalent by using a filler sprayer. The number of naturally occurring parasites on all leaves was surveyed 5 days after spraying, and a corrected density index was calculated. Note that the corrected density index is an index that expresses the effectiveness of pest control based on the density of pests in the treated area relative to the density of pests in the untreated area in consideration of the density of pests before spraying, and is calculated based on the following formula. A lower corrected density index indicates higher control efficacy.

[Formula 1]

$$\text{Corrected density index} = \frac{\text{Density in treated plot after X days}}{\text{Density in treated plot before spraying}} \times \frac{\text{Density in non-treated plot before spraying}}{\text{Density in non-treated plot after X days}} \times 100$$

Table 7 shows the test results obtained.

[Table 7]

| Agent(s) tested | Dilution factor | Replication | Number of parasites | | Corrected density index |
|---|---|---|---|---|---|
| | | | Before spraying | 5 days after spraying | |
| BT bacteria preparation + Dried culture of bacteria producing prumycin or a salt thereof | 2,000 fold + 2,000 fold | I<br>II<br>(Total) | 72<br>54<br>(126) | 8<br>10<br>(18) | 19.7 |
| BT bacteria preparation + Dried culture of bacteria producing prumycin or a salt thereof | 2,000 fold + 20,000 fold | I<br>II<br>(Total) | 43<br>52<br>(95) | 17<br>22<br>(39) | 56.6 |
| BT bacteria preparation + Dried culture of bacteria producing kanosamine or a salt thereof | 2,000 fold + 2,000 fold | I<br>II<br>(Total) | 50<br>54<br>(104) | 13<br>9<br>(22) | 29.1 |
| BT bacteria preparation + Dried culture of bacteria producing kanosamine or a salt thereof | 2,000 fold + 20,000 fold | I<br>II<br>(Total) | 49<br>60<br>(99) | 20<br>22<br>(42) | 58.4 |
| BT bacteria preparation | 2,000 fold | I<br>II<br>(Total) | 50<br>67<br>(117) | 28<br>29<br>(57) | 67.1 |
| Dried culture of bacteria producing prumycin or a salt thereof | 2,000 fold | I<br>II<br>(Total) | 46<br>55<br>(101) | 34<br>38<br>(72) | 98.2 |
| Dried culture of bacteria producing kanosamine or a salt thereof | 2,000 fold | I<br>II<br>(Total) | 48<br>50<br>(98) | 40<br>33<br>(73) | 102.6 |
| No treatment | - | I<br>II<br>(Total) | 49<br>53<br>(102) | 34<br>40<br>(74) | 100.0 |

The results in Table 7 have demonstrated that the corrected density index of each agent tested against the larvae of *Spodoptera litura* five days after spraying was 19.7 for the plot where the mixture of the BT bacteria preparation (dilution factor: 2,000 fold) and the dried culture of bacteria producing prumycin or a salt thereof (dilution factor: 2,000 fold) was applied and 29.1 for the plot where the mixture of the BT bacteria preparation (dilution factor: 2,000 fold) and the dried culture of bacteria producing kanosamine or a salt thereof (dilution factor: 2,000 fold) was applied. The corrected density index for each mixture application plot was much lower than that (67.1) for the plot with single application of the BT bacteria preparation (dilution factor: 2,000 fold). The combination of the BT bacteria preparation and the dried culture of bacteria producing prumycin or a salt thereof or the dried culture of bacteria producing kanosamine or a salt thereof was found to exert an excellent synergistic effect in pest control.

Meanwhile, the corrected density index of each agent tested against the larvae of *Spodoptera litura* five days

after spraying was 56.6 for the plot where the mixture of the BT bacteria preparation (dilution factor: 2,000 fold) and the dried culture of bacteria producing prumycin or a salt thereof (dilution factor: 20,000 fold) was applied and 58.4 for the plot where the mixture of the BT bacteria preparation (dilution factor: 2,000 fold) and the dried culture of bacteria producing kanosamine or a salt thereof (dilution factor: 20,000 fold) was applied. The corrected density index for each mixture application plot was lower than that (67.1) for the plot with single application of the BT bacteria preparation (dilution factor: 2,000 fold). Improved pest control effect was observed.

As described above, the corrected density index of the mixture application plot where a dried culture of bacteria producing prumycin or a salt thereof or a dried culture of bacteria producing kanosamine or a salt thereof (dilution factor: 2,000 fold) (equivalent to a prumycin or kanosamine concentration of 5 ppm) was applied together with the BT bacteria preparation was much lower than the corrected density index of the plot of single application of the BT bacteria preparation (dilution factor: 2,000 fold). Excellent pest control effect was found to be achieved. In addition, the corrected density index for the mixture application plot where a dried culture of bacteria producing prumycin or a salt thereof or a dried culture of bacteria producing kanosamine or a salt thereof (dilution factor: 20,000 fold) (equivalent to a prumycin or kanosamine concentration of 0.5 ppm) was applied together with the BT bacteria preparation was clearly lower than the corrected density index for the plot with single application of the BT bacteria preparation (dilution factor: 2,000 fold). Excellent pest control effect was found to be achieved.

The corrected density index for the plot with single application of the dried culture of bacteria producing prumycin or a salt thereof (dilution factor: 2,000 fold) or the plot with single application of the dried culture of bacteria producing kanosamine or a salt thereof (dilution factor: 2,000 fold) was similar to the corrected density index for no treatment. No insecticidal effect against the larvae of *Spodoptera litura* was observed.

[Test Example 3: Storage stability test/Test of efficacy against 3rd instar larvae of *Plutella xylostella].*

The wettable powder containing the dried Btk culture and prumycin hydrochloride or kanosamine hydrochloride as prepared in Preparation Examples 3 and 4 was admixed with calcium chloride (added to reach a content of 1.0 mass% or 5.0 mass% based on the total amount of the wettable powder and calcium chloride) as shown in Tables 8 and 9 with or without heat treatment (at 54°C for 2 weeks in a sealed condition). In this way, wettable powder mixed with calcium chloride and heat-treated wettable powder were prepared. In the case of both calcium chloride addition and heat treatment, heat treatment was applied to the wettable powder after calcium chloride addition. Also, wettable powder without addition of calcium chloride or without heat treatment was also prepared as shown in Tables 8 and 9. Insecticidal activity of each wettable powder against 3rd instar larvae of *Plutella xylostella* was determined on leaves of Chinese cabbage by the method of dipping a leaf piece in an agent liquid as described below.

Each wettable powder prepared as described above was diluted 4,000-fold (dilution factor) with distilled water, and each agent liquid was thus prepared. The third and fourth leaves of the main leaves of Chinese cabbage (cultivar: Nozaki No. 2) were cut into a circle of 30 mm in diameter, and the resulting circular leaves were dipped in 20 mL of each agent liquid prepared as described above for 30 seconds and then air-dried on filter paper. First, whether the leaf surface of the Chinese cabbage was sufficiently dry was checked. Next, the two dried leaves of the Chinese cabbage were stacked and allowed to stand on a plastic Petri dish (35 mm in diameter and 10 mm in height). Five 3rd instar larvae of *Plutella xylostella* were released on the leaf surface per petri dish, which was allowed to stand under conditions including a light period at 25°C for 16 hours/a dark period for 8 hours (1 plot, 4 replicates). Three days after the insects were released, the number of dead insects was macroscopically counted by observing the inside of the petri dish. The (measured) insecticidal rate (%) of the number of insects killed to the total number of insects reared was determined.

Tables 8 and 9 below show the test results obtained.

[Table 8]

| Agent(s) tested | Dilution factor | Calcium chloride Concentration (mass %) | Heat treatment (54°C, 2 weeks) | Insecticidal rate (%) |
|---|---|---|---|---|
| Wettable powder containing dried Btk culture and prumycin hydrochloride | 4,000 fold | 0.0 | Absent | 100 |
| Wettable powder containing dried Btk culture and prumycin hydrochloride | 4,000 fold | 0.0 | Present | 19 |
| Wettable powder containing dried Btk culture and prumycin hydrochloride | 4,000 fold | 1.0 | Absent | 100 |
| Wettable powder containing dried Btk culture and prumycin hydrochloride | 4,000 fold | 1.0 | Present | 69 |

(continued)

| Agent(s) tested | Dilution factor | Calcium chloride Concentration (mass %) | Heat treatment (54°C, 2 weeks) | Insecticidal rate (%) |
|---|---|---|---|---|
| Wettable powder containing dried Btk culture and prumycin hydrochloride | 4,000 fold | 5.0 | Absent | 100 |
| Wettable powder containing dried Btk culture and prumycin hydrochloride | 4,000 fold | 5.0 | Present | 97 |

[Table 9]

| Agent(s) tested | Dilution factor | Calcium chloride Concentration (mass %) | Heat treatment (54°C, 2 weeks) | Insecticidal rate (%) |
|---|---|---|---|---|
| Wettable powder containing dried Btk culture and kanosamine hydrochloride | 4,000 fold | 0.0 | Absent | 100 |
| Wettable powder containing dried Btk culture and kanosamine hydrochloride | 4,000 fold | 0.0 | Present | 15 |
| Wettable powder containing dried Btk culture and kanosamine hydrochloride | 4,000 fold | 1.0 | Absent | 99 |
| Wettable powder containing dried Btk culture and kanosamine hydrochloride | 4,000 fold | 1.0 | Present | 59 |
| Wettable powder containing dried Btk culture and kanosamine hydrochloride | 4,000 fold | 5.0 | Absent | 100 |
| Wettable powder containing dried Btk culture and kanosamine hydrochloride | 4,000 fold | 5.0 | Present | 89 |

The results of Tables 8 and 9 have demonstrated that the wettable powder without calcium chloride showed extremely low insecticidal activity upon heat treatment. By contrast, the wettable powder containing 1.0 or 5.0 mass% of calcium chloride was able to suppress the decrease in insecticidal activity due to heat treatment when compared to the wettable powder free of calcium chloride, and the suppression effect was particularly significant when the calcium chloride content was 5.0 mass%. This may be because the storage stability of the wettable powder is improved by the addition of calcium chloride.

The effect of calcium chloride on the improvement in storage stability was observed in both the wettable powder containing prumycin hydrochloride and the wettable powder containing kanosamine hydrochloride. The heat treatment at 54°C for 2 weeks is thermodynamically equivalent to a thermal history of 2 years at room temperature.

The above has demonstrated that the composition formed by adding calcium chloride to the wettable powder containing the dried Bt culture and prumycin hydrochloride or kanosamine hydrochloride is an insecticidal composition for agricultural or horticultural use with excellent insecticidal effects and storage stability.

[Test Example 4: Test of efficacy against 3rd instar larvae of *Helicoverpa armigera*]

The following procedure was used to measure the activity of each insecticidal protein (Cry1A(a), CrylA(b), or Cry1A(c)) upon the addition of prumycin hydrochloride or kanosamine hydrochloride by using an artificial feed mixture bioassay.

Each insecticidal protein solution was prepared by adding distilled water to each insecticidal protein CrylA(a), CrylA(b), or Cry1A(c) expressed and purified in *E. coli* according to the method described in NPL 33. Each insecticidal protein solution obtained was admixed with prumycin hydrochloride prepared in Production Example 1 or kanosamine hydrochloride (Sigma-Aldrich Japan, LLC.) at a prescribed concentration to prepare a solution containing the insecticidal protein and prumycin hydrochloride or kanosamine hydrochloride. The obtained solution was admixed with artificial feed (Insecta LFS (manufactured by Nosan Corporation)) as shown in Tables 10 to 13 so that the content of each insecticidal protein was 0.063 to 8 μg/g of the artificial feed and the content of prumycin hydrochloride or kanosamine hydrochloride was 10 μg/g of the artificial feed. In this way, each artificial feed containing the insecticidal protein and prumycin hydrochloride or kanosamine hydrochloride was prepared. In addition, the above-described insecticidal protein solution, prumycin hydrochloride, or kanosamine hydrochloride alone was admixed with the artificial feed as shown in Tables 10 to 13 so that the content of each insecticidal protein was 0.063 to 8 μg/g of the artificial feed or the content of prumycin hydrochloride or kanosamine hydrochloride was 10 μg/g of the artificial feed, respectively. In this way, each artificial feed containing the insecticidal protein, prumycin hydrochloride, or kanosamine hydrochloride alone was prepared. Each artificial feed containing or free of each substance thus obtained was placed on a petri dish (35 mm in diameter and 10 mm in height), and one 3rd instar larva of *Helicoverpa armigera* reared in a rearing room at 25°C was released into each petri dish (10 replicates). Each petri dish was closed and kept at 25°C for 4 days.

The number of dead insects was then macroscopically examined by observing the inside of each petri dish, and the $LC_{50}$ value was calculated by the probit method. Next, based on the following equation, the ratio of the test plot without prumycin hydrochloride or kanosamine hydrochloride to the test plot with prumycin hydrochloride or kanosamine hydrochloride was calculated to determine the increase in insecticidal activity when prumycin hydrochloride or kanosamine hydrochloride was added.

[Formula 2]

$$\text{Increase in insecticidal activity} = \frac{\text{LC}_{50}\text{ value for test plot without prumycin hydrochloride or kanosamine hydrochloride}}{\text{LC}_{50}\text{ value for test plot with prumycin hydrochloride or kanosamine hydrochloride}}$$

Tables 10 to 13 below show the test results obtained.

[Table 10]

| Insecticidal protein | | Prumycin hydrochloride | *Helicoverpa armigera* | | |
|---|---|---|---|---|---|
| Type | μg/g Feed | μg/g Feed | Number of dead insects/Number of test insects | $LC_{50}$ value | Increase in insecticidal activity (How many times $LC_{50}$ value was decreased) |
| Cry1A (a) | 8 | 10 | 10/10 | 0.7 | 5.4 |
| | 4 | 10 | 10/10 | | |
| | 2 | 10 | 10/10 | | |
| | 1 | 10 | 6/10 | | |
| | 0.5 | 10 | 4/10 | | |
| | 0.25 | 10 | 0/10 | | |
| | 8 | 0 | 10/10 | 3.8 | - |
| | 4 | 0 | 4/10 | | |
| | 2 | 0 | 2/10 | | |
| | 1 | 0 | 0/10 | | |
| | 0.5 | 0 | 0/10 | | |
| | 0.25 | 0 | 0/10 | | |

(continued)

| Insecticidal protein | | Prumycin hydrochloride | *Helicoverpa armigera* | | |
|---|---|---|---|---|---|
| Type | μg/g Feed | μg/g Feed | Number of dead insects/Number of test insects | $LC_{50}$ value | Increase in insecticidal activity (How many times $LC_{50}$ value was decreased) |
| Cry1A (b) | 8 | 10 | 10/10 | 0.6 | 6.7 |
| | 4 | 10 | 10/10 | | |
| | 2 | 10 | 8/10 | | |
| | 1 | 10 | 6/10 | | |
| | 0.5 | 10 | 4/10 | | |
| | 0.25 | 10 | 2/10 | | |
| | 8 | 0 | 8/10 | 4.0 | - |
| | 4 | 0 | 4/10 | | |
| | 2 | 0 | 2/10 | | |
| | 1 | 0 | 2/10 | | |
| | 0.5 | 0 | 0/10 | | |
| | 0.25 | 0 | 0/10 | | |

[Table 11]

| Insecticidal protein | | Prumycin hydrochloride | *Helicoverpa armigera* | | |
|---|---|---|---|---|---|
| Type | μg/g Feed | μg/g Feed | Number of dead insects/Number of test insects | $LC_{50}$ value | Increase in insecticidal activity (How many times $LC_{50}$ value was decreased) |
| Cry1A (c) | 2 | 10 | 10/10 | 0.2 | 6.0 |
| | 1 | 10 | 10/10 | | |
| | 0.5 | 10 | 9/10 | | |
| | 0.25 | 10 | 7/10 | | |
| | 0.125 | 10 | 2/10 | | |
| | 0.063 | 10 | 1/10 | | |
| | 2 | 0 | 7/10 | 1.2 | - |
| | 1 | 0 | 6/10 | | |
| | 0.5 | 0 | 1/10 | | |
| | 0.25 | 0 | 0/10 | | |
| | 0.125 | 0 | 0/10 | | |
| | 0.063 | 0 | 0/10 | | |
| Absent | 0 | 10 | 0/10 | | |
| Absent | 0 | 0 | 0/10 | | |

[Table 12]

| Insecticidal protein | | Kanosamine hydrochloride | *Helicoverpa armigera* | | |
|---|---|---|---|---|---|
| Type | μg/g Feed | μg /g Feed | Number of dead insects/Number of test insects | $LC_{50}$ value | Increase in insecticidal activity (How many times $LC_{50}$ value was decreased) |
| Cry1A (a) | 8 | 10 | 10/10 | 1.2 | 3.2 |
| | 4 | 10 | 9/10 | | |
| | 2 | 10 | 8/10 | | |
| | 1 | 10 | 4/10 | | |
| | 0.5 | 10 | 1/10 | | |
| | 0.25 | 10 | 0/10 | | |
| | 8 | 0 | 10/10 | 3.8 | - |
| | 4 | 0 | 4/10 | | |
| | 2 | 0 | 2/10 | | |
| | 1 | 0 | 0/10 | | |
| | 0.5 | 0 | 0/10 | | |
| | 0.25 | 0 | 0/10 | | |
| CrylA (b) | 8 | 10 | 10/10 | 1.2 | 3.3 |
| | 4 | 10 | 9/10 | | |
| | 2 | 10 | 8/10 | | |
| | 1 | 10 | 4/10 | | |
| | 0.5 | 10 | 1/10 | | |
| | 0.25 | 10 | 0/10 | | |
| | 8 | 0 | 8/10 | 4.0 | - |
| | 4 | 0 | 4/10 | | |
| | 2 | 0 | 2/10 | | |
| | 1 | 0 | 2/10 | | |
| | 0.5 | 0 | 0/10 | | |
| | 0.25 | 0 | 0/10 | | |

[Table 13]

| Insecticidal protein | | Kanosamine hydrochloride | *Helicoverpa armigera* | | |
|---|---|---|---|---|---|
| Type | μg/g Feed | μg/g Feed | Number of dead insects/Number of test insects | $LC_{50}$ value | Increase in insecticidal activity (How many times $LC_{50}$ value was decreased) |
| Cry1A (c) | 2 | 10 | 10/10 | 0.4 | 3.0 |
| | 1 | 10 | 9/10 | | |
| | 0.5 | 10 | 7/10 | | |
| | 0.25 | 10 | 3/10 | | |
| | 0.125 | 10 | 0/10 | | |
| | 0.063 | 10 | 0/10 | | |
| | 2 | 0 | 7/10 | 1.2 | - |
| | 1 | 0 | 6/10 | | |
| | 0.5 | 0 | 1/10 | | |
| | 0.25 | 0 | 0/10 | | |
| | 0.125 | 0 | 0/10 | | |
| | 0.063 | 0 | 0/10 | | |
| Absent | 0 | 10 | 0/10 | | |
| Absent | 0 | 0 | 0/10 | | |

The results of Tables 10 to 13 have demonstrated that when prumycin hydrochloride alone or kanosamine hydrochloride alone was used, no insecticidal efficacy against the 3rd instar larvae of *Helicoverpa armigera* was observed. By contrast, when each insecticidal protein: Cry1A(a), Cry1A(b), or Cry1A(c) was used in combination with prumycin hydrochloride or kanosamine hydrochloride, respectively, for application, the $LC_{50}$ values for 3rd instar larvae of *Helicoverpa armigera* were significantly lower than the case where the insecticidal protein alone was used, and the insecticidal effect was thus extremely high. The above results have demonstrated that each insecticidal protein can be used in combination with prumycin hydrochloride or kanosamine hydrochloride to exert a synergistic effect on the insecticidal efficacy.

[Test Example 5: Test of efficacy against 3rd instar larvae of *Spodoptera litura*]

The following procedure was used to measure the activity of insecticidal protein (CrylC) upon the addition of prumycin hydrochloride or kanosamine hydrochloride by using the artificial feed mixture bioassay.

A CrylC solution was prepared by adding distilled water to CrylC expressed and purified in *E. coli* according to the method described in NPL 33. The Cry1C solution obtained was admixed with prumycin hydrochloride prepared in Production Example 1 or kanosamine hydrochloride (Sigma-Aldrich Japan, LLC.) at a prescribed concentration to prepare a solution containing CrylC and prumycin hydrochloride or kanosamine hydrochloride. The obtained solution was admixed with artificial feed (Insecta LFS (manufactured by Nosan Corporation)) as shown in Tables 14 and 15 so that the content of CrylC was 1.25 to 40.0 μg/g of the artificial feed and the content of prumycin hydrochloride or kanosamine hydrochloride was 10 μg/g of the artificial feed. In this way, each artificial feed containing CrylC and prumycin or kanosamine was prepared. In addition, the above-described CrylC solution, prumycin hydrochloride, or kanosamine hydrochloride alone was admixed with the artificial feed as shown in Tables 14 and 15 so that the content of each insecticidal protein was 1.25 to 40.0 μg/g of the artificial feed or the content of prumycin hydrochloride or kanosamine hydrochloride was 10 μg/g of the artificial feed, respectively. In this way, each artificial feed containing Cry1C, prumycin hydrochloride, or kanosamine hydrochloride alone was prepared. Each artificial feed containing or free of each substance thus obtained was placed on a petri dish (90 mm in diameter and 15 mm in height), and ten 3rd instar larva of *Spodoptera litura* reared in a rearing room at 25°C were released into each petri dish (3 replicates). Each petri dish was closed and kept at 25°C for 5 days.

After that, the number of dead insects was macroscopically counted by observing the inside of the petri dish.

The $LC_{50}$ values were calculated by the probit method, and the increase in insecticidal activity due to the addition of prumycin or kanosamine was calculated based on the same formula as in Test Example 4 above.

Tables 14 and 15 below show the test results obtained.

[Table 14]

| Insecticidal protein | | Prumycin hydrochloride | *Spodoptera litura* | | |
|---|---|---|---|---|---|
| Type | μg/g Feed | μg/g Feed | Number of dead insects/Number of test insects | $LC_{50}$ value | Increase in insecticidal activity (How many times $LC_{50}$ value was decreased) |
| Cry1C | 40.0 | 10 | 10/10 | 4.6 | 5.0 |
| | 20.0 | 10 | 10/10 | | |
| | 10.0 | 10 | 9/10 | | |
| | 5.0 | 10 | 5/10 | | |
| | 2.5 | 10 | 1/10 | | |
| | 1.25 | 10 | 0/10 | | |
| | 40.0 | 0 | 8/10 | 23.0 | - |
| | 20.0 | 0 | 4/10 | | |
| | 10.0 | 0 | 1/10 | | |
| | 5.0 | 0 | 0/10 | | |
| | 2.5 | 0 | 0/10 | | |
| | 1.25 | 0 | 0/10 | | |
| Absent | 0 | 10 | 0/10 | | |
| Absent | 0 | 0 | 0/10 | | |

[Table 15]

| Insecticidal protein | | Kanosamine hydrochloride | *Spodoptera litura* | | |
|---|---|---|---|---|---|
| Type | μg/g Feed | μg /g Feed | Number of dead insects/Number of test insects | $LC_{50}$ value | Increase in insecticidal activity (How many times $LC_{50}$ value was decreased) |
| Cry1C | 40.0 | 10 | 10/10 | 7.9 | 2.9 |
| | 20.0 | 10 | 9/10 | | |
| | 10.0 | 10 | 6/10 | | |
| | 5.0 | 10 | 3/10 | | |
| | 2.5 | 10 | 0/10 | | |
| | 1.25 | 10 | 0/10 | | |
| | 40.0 | 0 | 8/10 | 23.0 | - |
| | 20.0 | 0 | 4/10 | | |
| | 10.0 | 0 | 1/10 | | |
| | 5.0 | 0 | 0/10 | | |
| | 2.5 | 0 | 0/10 | | |
| | 1.25 | 0 | 0/10 | | |
| Absent | 0 | 10 | 0/10 | | |
| Absent | 0 | 0 | 0/10 | | |

The results of Tables 14 and 15 have demonstrated that when prumycin hydrochloride alone or kanosamine hydrochloride alone was used, no insecticidal efficacy against the 3rd instar larvae of *Spodoptera litura* was observed. By contrast, when the insecticidal protein CrylC was used in combination with prumycin hydrochloride or kanosamine hydrochloride, respectively, for application, the $LC_{50}$ values for 3rd instar larvae of *Spodoptera litura* were significantly lower than the case where the insecticidal protein alone was used, and the insecticidal effect was thus extremely high. The above results have demonstrated that the insecticidal protein can be used in combination with prumycin hydrochloride or kanosamine hydrochloride to exert a synergistic effect on the insecticidal efficacy.

INDUSTRIAL APPLICABILITY

The composition of the present invention containing *Bacillus thuringiensis* and prumycin or a salt thereof or kanosamine or a salt thereof has excellent insecticidal activity and can thus be used as a pest composition with high insecticidal efficacy and excellent stability.

## Claims

1. An insecticidal composition for agricultural or horticultural use, comprising:

   an insecticidal protein derived from *Bacillus thuringiensis;* and
   prumycin or a salt thereof or kanosamine or a salt thereof.

2. The insecticidal composition for agricultural or horticultural use according to claim 1, wherein the insecticidal protein comprises CrylA or CrylC.

3. The insecticidal composition for agricultural or horticultural use according to claim 1 or 2, comprising a dried *Bacillus thuringiensis* culture comprising the insecticidal protein.

4. The insecticidal composition for agricultural or horticultural use according to any one of claims 1 to 3, comprising a

dried culture of bacteria that produces prumycin or a salt thereof or kanosamine or a salt thereof.

**5.** The insecticidal composition for agricultural or horticultural use according to any one of claims 1 to 4, further comprising 0.1 to 10 mass% of calcium chloride.

**6.** The insecticidal composition for agricultural or horticultural use according to any one of claims 1 to 5, which is for application to a plant while using a liquid comprising the prumycin or a salt thereof or kanosamine or a salt thereof in an amount of 0.1 ppm to 100 ppm.

**7.** The insecticidal composition for agricultural or horticultural use according to any one of claims 1 to 6, which is for application to a plant while using a liquid comprising the insecticidal protein in an amount of 0.1 ppm to 500 ppm.

**8.** The insecticidal composition for agricultural or horticultural use according to any one of claims 1 to 7, comprising prumycin hydrochloride.

**9.** The insecticidal composition for agricultural or horticultural use according to any one of claims 1 to 8, comprising kanosamine hydrochloride.

**10.** A method of controlling an agricultural or horticultural pest, the method comprising the steps of (a) applying an insecticidal protein derived from *Bacillus thuringiensis* to a plant, and (b) applying prumycin or a salt thereof or kanosamine or a salt thereof to the plant simultaneously, continuously, or separately with the insecticidal protein.

**11.** A method of controlling an agricultural or horticultural pest, comprising the step of applying prumycin or a salt thereof or kanosamine or a salt thereof to a recombinant plant that produces an insecticidal protein derived from *Bacillus thuringiensis.*

**12.** The control method according to claim 10, where the application in step (a) or (b) comprises soil mixing, irrigation, seed smear, seed dipping, or foliage application.

**13.** The control method according to claim 10 or 12, comprising using an insecticidal composition for agricultural or horticultural use comprising the insecticidal protein and the prumycin or a salt thereof or kanosamine or a salt thereof.

## INTERNATIONAL SEARCH REPORT

International application No.
PCT/JP2021/021046

A. CLASSIFICATION OF SUBJECT MATTER
A01N 63/23(2020.01)i; A01N 63/22(2020.01)i; A01P 7/04(2006.01)i
FI: A01N63/23; A01N63/22; A01P7/04

According to International Patent Classification (IPC) or to both national classification and IPC

B. FIELDS SEARCHED

Minimum documentation searched (classification system followed by classification symbols)
A01N63/23; A01N63/22; A01P7/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/MEDLINE/BIOSIS (STN), JSTPlus/JMEDPlus/JST7580 (JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 2001-516201 A (ABBOTT LABORATORIES) 25 September 2001 (2001-09-25) 1. Bacillus thuringiensis, 3. Characteristics of IA | 1-13 |
| A | 齋藤 哲夫他，遺伝子組換えによる害虫防除の現状と問題点，日本応用動物昆虫学会誌，2005, vol. 49, no. 4, pp. 171-185, 1. Recombination of Bt gene, (SATO, Tetsuo et al. Situation and Problems on Transgenic Technology for Insect Pest Control. Japanese Journal of Applied Entomology and Zoology.) | 1-13 |
| A | KEVANY, B. M. et al. Characterization of the complete zwittermicin A biosynthesis gene cluster from Bacillus cereus. Appl Environ Microbiol., 2009, vol. 75, no. 4, p. 1144-55, abstract | 1-13 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 July 2021 (01.07.2021) | 13 July 2021 (13.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/021046

C (Continuation). DOCUMENTS CONSIDERED TO BE RELEVANT

| Category* | Citation of document, with indication, where appropriate, of the relevant passages | Relevant to claim No. |
|---|---|---|
| A | MILNER, J. L. et al. Production of kanosamine by Bacillus cereus UW85. Appl Environ Microbiol., 1996, vol. 62, no. 8, p. 3061-5, abstract | 1-13 |
| A | WO 2018/029775 A1 (SDS BIOTECH CORP) 15 February 2018 (2018-02-15) claims 1-6, paragraph [0012], test example 1-3 | 1-13 |

Form PCT/ISA/210 (continuation of second sheet) (January 2015)

**INTERNATIONAL SEARCH REPORT**
Information on patent family members

International application No.
PCT/JP2021/021046

| Patent Documents referred in the Report | Publication Date | Patent Family | Publication Date |
|---|---|---|---|
| JP 2001-516201 A | 25 Sep. 2001 | US 6268181 B1<br>2.1 Bacillus thuringiensis,<br>7. EXAMPLE: characterization of Ia<br>WO 1996/039037 A1<br>EP 831708 A1<br>KR 10-1999-0022529 A | |
| WO 2018/029775 A1 | 15 Feb. 2018 | US 2019/0124923 A1<br>claims 1-6, paragraph [0040], test examples 1-3<br>EP 3498097 A1<br>KR 10-2018-0119689 A<br>CN 109414018 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H08501798 A
- JP 2001516201 A
- WO 2020102592 A1
- US 6635245 B1
- JP S54157896 A
- JP H02209803 A
- WO 2018029775 A1


### Non-patent literature cited in the description


- *Plant Biotechnology Journal,* 2011, vol. 9, 283-300
- *Microbiological Reviews,* June 1989
- *Toxins,* 2014, vol. 6, 3296-3325
- *Appl. Environ. Microbiol,* February 1996, 583-586
- *Letters in Applied Microbiology,* 2005, vol. 40, 460-465
- *PLoS ONE,* 2014, vol. 9 (10), e107196
- *Appl. Biochem. Biotechnol.,* 2019, vol. 188 (3), 798-809
- *Appl. Environ. Microbiol.,* February 1996, 564-569
- *Appl. Environ. Microbiol,* April 1998, 1385-1389
- *Tetrahedron Lett.,* 1994, vol. 35 (16), 2499-2502
- *Curr. Microbiol.,* 1998, vol. 37, 6-11
- *J. Antibiotics.,* 1971, vol. 24, 900-901
- *Agric. Biol. Chem,* 1973, vol. 37, 2805-2812
- *J. Chem. Soc. Perkin Trans.,* 1974, vol. 1, 1627-1631
- *Tetrahedron Lett.,* 1975, vol. 16, 1853-1856
- *Tetrahedron Lett.,* 1976, vol. 17, 379-382
- *Chem. Lett.,* 1976, vol. 5, 201-202
- *Carbohydr. Res.,* 1978, vol. 60, 75-84
- *Carbohydr. Res.,* 1979, vol. 72, 261-266
- *B. Chem. Soc. Jpn.,* 1978, vol. 51, 951-952
- *Carbohydr. Res.,* 1976, vol. 51, 10-12
- *Agric. Biol. Chem.,* 1978, vol. 42, 153-158
- *Carbohydr. Res.,* 1976, vol. 52, 137-149
- *J. Carbohydr. Chem.,* 1988, vol. 7, 605-616
- *J. Antibiotics, Ser. A.,* 1958, vol. 11 (2), 73
- *Appl. Environ. Microbiol.,* 1996, vol. 62 (8), 3061-3065
- *J. Am. Chem. Soc.,* 1961, vol. 83 (8), 1882-1885
- *Angew. Chem. Int. Ed.,* 1966, vol. 5 (11), 967-967
- *J. Bacteriol.,* 1967, vol. 94 (2), 485
- *Appl. Environ. Microbiol.,* 1998, vol. 64 (12), 4782-4788
- *Pest Manag Sci.,* 2017, vol. 73, 2419-2428
- *Appl. Environ. Microbiol,* December 1994, 4404-4412
- *Appl. Environ. Microbiol,* July 2005, 3966-3977
- Pesticide Manual. British Crop Protection Council, 2013
- Kumiai Pesticide Handbook. ZEN-NOH, 2018
- **IWABUCHI et al.** *J. Carbohydr. Chem,* 1988, vol. 7, 605-616